# EUROPEAN PATENT APPLICATION

(11) **EP 4 748 220 A1**
(43) Date of publication of application: **27.05.2026**
(21) Application number: 24864769.5
(22) Date of filing: 14.09.2024
(51) Int. Cl.: A01D 34/82

(54) **INTELLIGENT MOWER**

(30) Priority: 15.09.2023 CN 202311196717; 15.09.2023 CN 202322519090 U; 08.12.2023 CN 202311685903; 11.09.2024 CN 202422230057 U; 11.09.2024 CN 202411273440
(71) Applicant: Ecovacs Robotics Co., Ltd., Suzhou, Jiangsu 215124 (CN)
(72) Inventor: ZHAO, Fengli, Suzhou, Jiangsu 215124 (CN); YUAN, Guanlei, Suzhou, Jiangsu 215124 (CN); WU, Yongdong, Suzhou, Jiangsu 215124 (CN); PU, Zhigao, Suzhou, Jiangsu 215124 (CN); XU, Hanjun, Suzhou, Jiangsu 215124 (CN); NI, Timin, Suzhou, Jiangsu 215124 (CN)
(74) Representative: WSL Patentanwälte Partnerschaft mbB
(86) International application number: PCT/CN2024/119032
(87) International publication number: WO 2025/056054

(57) **Abstract**

The embodiments of the present application provides an intelligent mower, comprising: an equipment body having a left side and a right side along a travel direction of the equipment body; a cutting mechanism arranged at a bottom of the equipment body and close to a target side of the equipment body, wherein the target side is the left side or the right side; and a first protective cover arranged above the cutting mechanism and having a first protective side wall extending downward, wherein a bottom of the first protective side wall corresponding to the target side is provided with a folded edge that is lower than the cutting mechanism and extends toward an inner side of the first protective cover; wherein, there is a gap between an end of the folded edge and a tool nose of the cutting mechanism in a horizontal direction. In the technical solution of the embodiments of the present application, the folded edge provided on the first protective side wall can achieve a better protective effect on the target side. Additionally, the gap between the end of the folded edge and the tool nose of the cutting mechanism in the horizontal direction enables the cutting mechanism to effectively cut to the lawn edge, resulting in higher cutting efficiency.

## Description

### CROSS REFERENCE

The present application claims priority to the following Chinese patent applications, the entire contents of which are incorporated herein by reference.

| Filing Date | Application No. | Application Title |
|---|---|---|
| 2023-09-15 | 202311196717.3 | Intelligent Mower |
| 2023-09-15 | 202322519090.2 | Intelligent Mower |
| 2023-12-08 | 202311685903.3 | Intelligent Mower |
| 2024-09-11 | 202422230057.2 | Intelligent Mower |
| 2024-09-11 | 202411273440.4 | Intelligent Mower |

### TECHNICAL FIELD

The present application relates to the field of electrical equipment, and in particular relates to an intelligent mower.

### BACKGROUND

With the continuous development of electromechanical technology, many tasks can be completed using electromechanical equipment. For example, in lawn mowing work, the use of a movable mower can not only efficiently mow large areas of lawn but also ensure that the mown lawn is neat and uniform. The high-speed rotating cutting mechanism is dangerous to some extent. Usually, for the safety of users, the rotating cutting mechanism of the mower is provided with a protective cover.

By reducing the distance between the side of the protective cover and the tool nose and reducing the distance between the protective cover and the ground, better protective performance can be provided, but there are problems such as weed entanglement and large operating resistance of the cutting mechanism.

### SUMMARY OF THE INVENTION

In view of the above problems, the present application is proposed to solve the above problems or at least partially solve the above problems by providing an intelligent mower.

In one embodiment of the present application, an intelligent mower is provided and comprises:
an equipment body having a left side and a right side in a width direction of the equipment body;
a cutting mechanism eccentrically arranged at a bottom of the equipment body and close to a target side of the equipment body, wherein the target side is the left side or the right side, and the cutting mechanism has a cutting area relative to the equipment body;
a first protective cover having a first protective side wall extending downward, wherein a bottom of the first protective side wall corresponding to the target side is provided with a folded edge that is lower than the cutting mechanism and extends toward an inner side of the first protective cover;
wherein, there is a gap between an end of the folded edge and the cutting area of the cutting mechanism in a horizontal direction.

In another embodiment of the present application, an intelligent mower is further provided and comprises:
an equipment body having a left side and a right side in a width direction of the equipment body;
a cutting mechanism eccentrically arranged at a bottom of the equipment body and close to a target side of the equipment body, wherein the target side is the left side or the right side;
a first protective cover arranged above the cutting mechanism, the first protective cover having a first protective side wall extending downward; a bottom of the first protective side wall is lower than a cutting tool on the cutting mechanism;
a second protective cover arranged above the first protective cover, a part of the second protective cover corresponding to the target side of the equipment body is provided with a second protective side wall extending downward;
wherein, the second protective cover extends a distance between the target side of the equipment body and the cutting tool in a horizontal direction.

In another embodiment of the present application, an intelligent mower is further provided and comprises:
an equipment body, wherein a bottom of the equipment body is provided with a traveling wheel set, the traveling wheel set includes a front wheel set and a rear wheel set;
a cutting mechanism located between the front wheel set and the rear wheel set and positioned close to a right side or a left side of the bottom of the equipment body;
a second protective cover located outside the cutting mechanism and having an inner protective wall and an outer protective wall, wherein a height of the inner protective wall from the ground is lower than a height of the outer protective wall from the ground, and there is a gap between the inner protective wall and the outer protective wall.

Preferably, a width of the second protective cover is B, and B>20mm.

Preferably, a distance between the outer protective wall and a cutting area is F, and 25mm≤F≤55mm.

Preferably, a height difference between a bottom of the inner protective wall and a bottom of the outer protective wall is D4, and 10mm≤D4≤25mm.

Preferably, a height of a bottom of the inner protective wall is D2, and 30mm≤D2≤ 55mm.

Preferably, the intelligent mower further comprises:
a first protective cover located between the second protective cover and the cutting mechanism, the first protective cover and the cutting mechanism are arranged at the bottom of the equipment body, and the first protective cover and the cutting mechanism can move up and down synchronously relative to the equipment body.

Preferably, an outer side of the second protective cover is flush with a corresponding outer side of the equipment body and an outer side of the rear wheel set, and a diameter of the cutting mechanism is larger than half of a width of the bottom of the equipment body.

Preferably, the front wheel set has a front wheel rotation area relative to the equipment body, the cutting mechanism has a first cutting area relative to the equipment body, part of the first cutting area protrudes out relative to the rear wheel set and the front wheel rotation area, and an outer side of the second protective cover exceeds an outer side of the rear wheel set.

Preferably, the intelligent mower further comprises:
a second cutting mechanism having a second cutting area relative to the equipment body, the second cutting area is located inside relative to the traveling wheel set, and a diameter of the second cutting mechanism is 1.5 times a diameter of the cutting mechanism.

Preferably, a distance between the second cutting area and the first cutting area is L, and L≥10mm.

In another embodiment of the present application, an intelligent mower is further provided and comprises:
an equipment body having a left side and a right side in a width direction of the equipment body;
a cutting mechanism eccentrically arranged at a bottom of the equipment body and close to a target side of the equipment body, wherein the target side is the left side or the right side;
a first protective cover arranged above the cutting mechanism, the first protective cover having a first protective side wall extending downward; a bottom of the first protective side wall is lower than a cutting tool on the cutting mechanism;
a second protective cover arranged above the first protective cover, a part of the second protective cover corresponding to the target side of the equipment body is provided with a second protective side wall extending downward;
a side of the second protective side wall facing the first protective side wall is provided with a protective structure, the protective structure extends a distance between the target side of the equipment body and the cutting tool in a horizontal direction, a lower side of the protective structure can rotate toward the first protective side wall, and a bottom end of the protective structure is lower than a bottom end of the second protective side wall.

Preferably, the protective structure comprises:
a bracket, one end of the bracket extends in a transverse direction and is connected to the side of the second protective side wall facing the first protective side wall, and the other end of the bracket extends in a vertical direction to be flush with the bottom end of the second protective side wall;
a rotating plate rotatably arranged on a side of the vertically extending end of the bracket facing the second protective side wall.

Preferably, a side of the first protective side wall facing the cutting mechanism is provided with a protective plate.

Preferably, the protective plate comprises:
a guide part, one end of the guide part is connected to the first protective side wall, and the guide part forms an acute angle with the first protective side wall; and
a vertical part, one end of the vertical part is connected to the other end of the guide part, and the other end of the vertical part extends toward the ground to be flush with a bottom end of the first protective side wall.

Preferably, a distance between the cutting mechanism and a bottom end of the vertical part in a vertical direction is M, and 12mm≤M≤15mm.

Preferably, a height of a bottom of the second protective side wall from the ground is 60mm.

Preferably, a distance between an outer side of the second protective side wall and an outermost end of the cutting mechanism is F, and 45mm≤F≤50mm.

Preferably, the second protective cover is an upper cover of the equipment body or a base of the equipment body.

Preferably, the second protective cover is the base of the equipment body;
the first protective cover and the cutting mechanism are arranged on the base, and the first protective cover and the cutting mechanism can move up and down synchronously relative to the base.

An intelligent mower is further provided and comprises:
an equipment body having a left side and a right side in a width direction of the equipment body;
a cutting mechanism arranged at a bottom of the equipment body and close to a target side of the equipment body, wherein the target side is the left side and/or the right side;
a first protective cover arranged above the cutting mechanism, the first protective cover having a first protective side wall extending downward; a bottom of the first protective side wall is lower than a cutting tool on the cutting mechanism;
a second protective cover arranged outside the first protective cover, a part of the second protective cover corresponding to the target side of the equipment body is provided with a second protective side wall extending downward;
a rotating plate rotatably connected to the first protective side wall and/or the second protective side wall corresponding to the target side;
wherein, in a vertical direction, the rotating plate extends downward, and when the rotating plate is subjected to an external force, the rotating plate rotates in a direction toward the cutting mechanism.

Optionally:
the rotating plate is connected to an end of the first protective side wall or an outer wall surface of the first protective side wall by means of a rotating shaft; or
the rotating plate is connected to an end of the second protective side wall, an inner wall surface of the second protective side wall or an outer wall surface of the second protective side wall by means of a rotating shaft; or
the rotating plate is arranged between the first protective side wall and the second protective side wall by means of a rotating shaft;
wherein, the rotating plate is rotatable around the rotating shaft, so that an inclination angle of the rotating plate relative to the first protective side wall or the second protective side wall ranges from 40 degrees to 70 degrees.

Optionally, when the rotating plate is connected to the first protective side wall, the first protective side wall is provided with a sliding seat, the rotating plate is slidably arranged in the sliding seat, and the rotating plate can slide up and down along the vertical direction relative to the first protective side wall.

Optionally, the intelligent mower further comprises a limiting member arranged on the first protective cover or the equipment body;
when the rotating plate moves downward to a limit position relative to the equipment body along the first protective side wall, the limiting member abuts against the rotating plate.

Optionally, along a length direction of the rotating plate, a front end and/or a rear end of the rotating plate is provided with a guide slope facing the ground.

Optionally, the cutting mechanism comprises a plurality of cutting cutterheads, and the plurality of cutting cutterheads are arranged at the bottom of the equipment body in a staggered manner along a length direction of the equipment body;
at least one of the cutting cutterheads is close to a target side of the equipment body.

Optionally, a bottom of the first protective side wall corresponding to the target side is provided with a protective structure that is lower than the cutting mechanism and extends toward an inner side of the first protective cover.

Optionally, an upward-facing surface of the protective structure is a horizontal surface or an inclined surface;
the protective structure is provided with a hollow structure.

Optionally, when the rotating plate is connected to the first protective side wall, a distance between a bottom of the rotating plate and the bottom of the first protective side wall is 5mm-15mm;
when the rotating plate is connected to the second protective side wall, a distance between the bottom of the rotating plate and a bottom of the second protective side wall is 10mm-30mm.

Optionally, the second protective side wall is movably connected to the second protective cover, and segments of the second protective side wall are arranged around a front side, a left side and a right side of the equipment body;
the equipment body is provided with collision sensing components on its sides facing different directions, and when the second protective side wall encounters a collision, the second protective side wall moves relative to the second protective cover to trigger a corresponding collision sensing component.

In the technical solution of the embodiments of the present application, by arranging a folded edge at the part of the first protective side wall corresponding to the left side or the right side of the equipment body, an excellent protective effect can be provided on the left side or the right side of the equipment body, thereby significantly reducing any harm of the intelligent mower to humans, animals, etc. In addition, there is a gap between the end of the folded edge and the tool nose of the cutting mechanism in the horizontal direction, so that the cutting mechanism can effectively cut to the lawn edge, and the cutting efficiency is higher.

### BRIEF DESCRIPTION OF THE DRAWINGS

To more clearly illustrate the technical solutions in the embodiments of the present application or in the prior art, the drawings that are needed for describing the embodiments or the prior art are briefly introduced below. Apparently, the drawings described below only represent some embodiments of the present application, and those skilled in the art can obtain other drawings from these drawings without creative efforts.
FIG. 1 is a top view of some components of an intelligent mower provided by an embodiment of the present application;
FIG. 2a is a cross-sectional view of some components of an intelligent mower provided by an embodiment of the present application;
FIG. 2b is a perspective view of some components of an intelligent mower provided by an embodiment of the present application;
FIG. 3 is a cross-sectional view of some components of another intelligent mower provided by an embodiment of the present application;
FIG. 4 is a schematic diagram of a cutting tool and a first protective cover in an intelligent mower provided by an embodiment of the present application in a second gear state;
FIG. 5 is a schematic diagram of a cutting tool and a first protective cover in an intelligent mower provided by an embodiment of the present application in a third gear state;
FIG. 6 is a schematic diagram of a cutting tool and a first protective cover in an intelligent mower provided by an embodiment of the present application in a fourth gear state;
FIGS. 7a-7d show finger protection state diagrams corresponding to the second protective side wall of the structure shown in FIG. 2a;
FIGS. 8a-8d show finger protection state diagrams corresponding to the second protective side wall of the structure shown in FIG. 3;
FIG. 9 shows an adult foot protection state diagram corresponding to the second protective side wall of the structure shown in FIG. 2a;
FIGS. 10a-10c show adult foot protection state diagrams corresponding to the second protective side wall of the structure shown in FIG. 3;
FIGS. 11a and 11b show standing child foot protection state diagrams corresponding to the second protective side wall of the structure shown in FIG. 2a;
FIGS. 12a-12c show standing child foot protection state diagrams corresponding to the second protective side wall of the structure shown in FIG. 3;
FIG. 13 shows a kneeling child foot protection state diagram corresponding to the second protective side wall of the structure shown in FIG. 2a;
FIG. 14 shows a kneeling child foot protection state diagram corresponding to the second protective side wall of the structure shown in FIG. 3;
FIG. 15 shows a structural schematic diagram of an intelligent mower provided by another embodiment of the present application;
FIG. 16 shows a structural schematic diagram of an intelligent mower provided by yet another embodiment of the present application;
FIG. 17 is a structural schematic diagram of an intelligent mower with a cutting area located inside provided by an embodiment of the present application;
FIG. 18 is a partial cross-sectional view of an intelligent mower provided by an embodiment of the present application;
FIG. 19 is a partial cross-sectional view of simulating hand-carrying an intelligent mower provided by an embodiment of the present application;
FIG. 20 is a first partial cross-sectional view of simulating a hand extending into the bottom of an equipment body provided by an embodiment of the present application;
FIG. 21 is a second partial cross-sectional view of simulating a hand extending into the bottom of an equipment body provided by an embodiment of the present application;
FIG. 22 is a first structural schematic diagram of an intelligent mower with a cutting area located outside provided by an embodiment of the present application;
FIG. 23 is a second structural schematic diagram of an intelligent mower with a cutting area located outside provided by an embodiment of the present application;
FIG. 24 is a partial cross-sectional view of a target side of an intelligent mower provided by an embodiment of the present application;
FIG. 25 is a schematic diagram of a cutting mechanism provided by an embodiment of the present application in a gear state of 80;
FIG. 26 is a schematic diagram of a cutting mechanism provided by an embodiment of the present application in a gear state of 90;
FIG. 27 is a schematic diagram of a cutting mechanism provided by an embodiment of the present application in a gear state of 100;
FIG. 28 is a schematic diagram of a cutting mechanism provided by an embodiment of the present application in a gear state of 70;
FIG. 29 is a schematic diagram of a cutting mechanism provided by an embodiment of the present application in a gear state of 60;
FIG. 30 is a schematic diagram of a cutting mechanism provided by an embodiment of the present application in a gear state of 50;
FIG. 31 is a schematic diagram of a cutting mechanism provided by an embodiment of the present application in a gear state of 40;
FIG. 32 is a cross-sectional view of an intelligent mower provided by an embodiment of the present application;
FIG. 33 is a cross-sectional view of another intelligent mower provided by an embodiment of the present application;
FIG. 34 is a schematic diagram of various arrangement positions of a rotating plate provided by an embodiment of the present application;
FIG. 35 is a cross-sectional view of yet another intelligent mower provided by an embodiment of the present application;
FIG. 36 is a bottom view of an intelligent mower provided by an embodiment of the present application;
FIG. 37 is a perspective view of a partial structure of an intelligent mower provided by an embodiment of the present application;
FIG. 38 is a left view of an intelligent mower provided by an embodiment of the present application;
FIG. 39 is a bottom view of a partial structure of yet another intelligent mower provided by an embodiment of the present application;
FIG. 40 is a cross-sectional view of simulating a hand extending into the bottom area of an intelligent mower provided by an embodiment of the present application;
FIG. 41 is a schematic diagram of simulating a hand extending into the bottom area of an intelligent mower when the cutting mechanism provided by an embodiment of the present application is in gear states of 30, 40 and 50;
FIG. 42 is a schematic diagram of simulating a hand extending into the bottom area of an intelligent mower when the cutting mechanism provided by an embodiment of the present application is in gear states of 60 and 70;
FIG. 43 is a schematic diagram of simulating a hand extending into the bottom area of an intelligent mower when the cutting mechanism provided by an embodiment of the present application is in gear states of 80 and 90.

### DETAILED DESCRIPTION OF SPECIFIC EMBODIMENTS

To enable those skilled in the art to better understand the solution of the present application, the technical solution in the embodiments of the present application will be clearly and completely described below in conjunction with the accompanying drawings in the embodiments of the present application.

The embodiments described in the present application are only a part of the embodiments of the present application, not all of them. Based on the embodiments described in the present application, all other embodiments obtainable by those skilled in the art without creative labor belong to the scope of protection of the present application. The term "comprising" mentioned throughout the description and claims is an open-ended term, so it should be interpreted as "comprising but not limited to". "Approximately" means within an acceptable error range, wherein those skilled in the art can solve the technical problem within a certain error range and basically achieve the technical effect. In addition, in the embodiments of the present application, "a plurality of" means two or more. Under the condition of no mutual contradiction, those skilled in the art can combine different embodiments or examples and features of different embodiments or examples described in the present description. The terms such as "first" and "second" in this document are used to distinguish different directions, structures, components, etc., and do not represent a sequence.

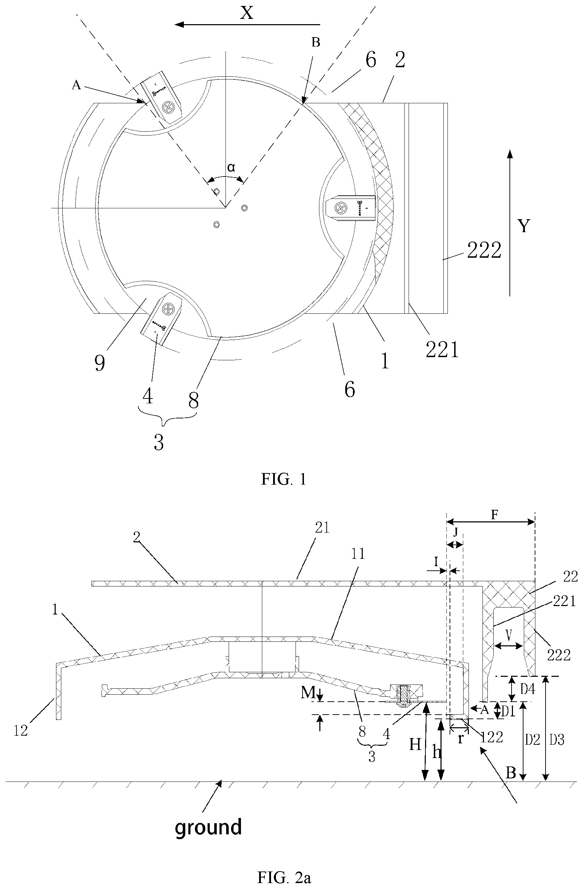

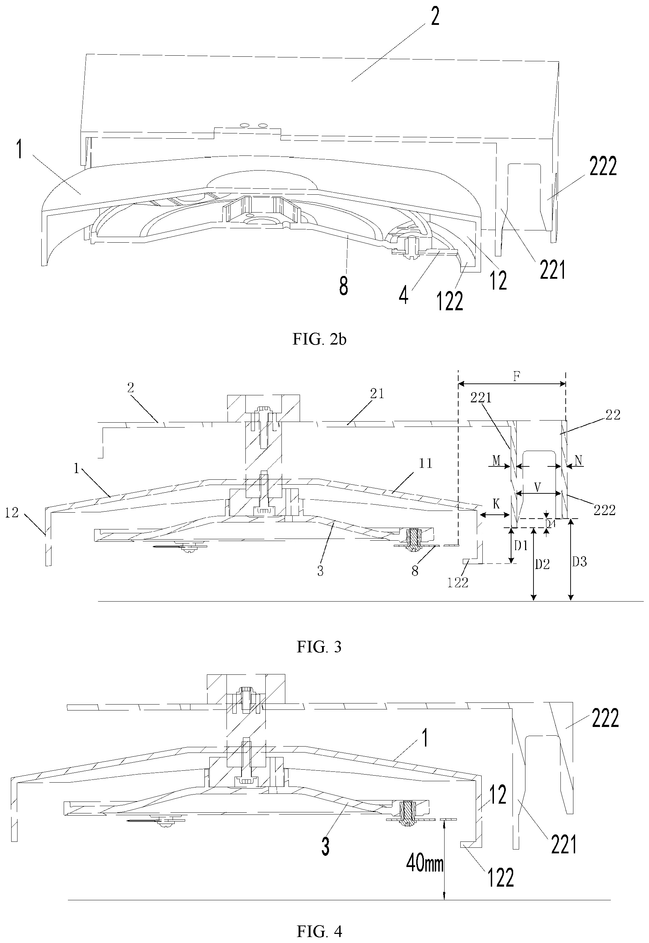

FIG. 1 is a top view of some components of an intelligent mower provided by an embodiment of the present application, FIG. 2a is a cross-sectional view of some components of an intelligent mower provided by an embodiment of the present application, FIG. 2b is a perspective view of some components of an intelligent mower provided by an embodiment of the present application, and FIG. 3 is a cross-sectional view of some components of another intelligent mower provided by an embodiment of the present application. Referring to FIGS. 1 to 3, an intelligent mower is provided in one embodiment of the present application, which comprises an equipment body, a cutting mechanism 3 and a first protective cover 1. The specific structure of the equipment body is not shown in FIGS. 1 to 3, and the appearance structure of the equipment body is not specifically limited in this embodiment. Along the travel direction of the equipment body, the equipment body has a front side, a rear side, a left side and a right side. The front side is located in the direction of arrow Y in FIG. 1, and the right side is located in the direction of arrow X in FIG. 1. In the width direction of the equipment body, the equipment body has a left side and a right side. The cutting mechanism 3 is eccentrically arranged at a bottom of the equipment body and close to a target side of the equipment body. The target side may be the left side or the right side, or both the left side and the right side of the equipment body can be target sides. The cutting mechanism 3 has a cutting area relative to the equipment body. The cutting area can be regarded as the area that can be cut by the cutting tool on the cutting mechanism 3 when the cutting mechanism 3 rotates, and the edge of the cutting area is the tool nose circle formed when the cutting tool rotates.

The cutting mechanism 3 faces the ground and has a certain distance from the ground. The first protective cover 1 is arranged above the cutting mechanism 3, and the first protective cover 1 has a first protective side wall 12 extending downward (toward the ground). The first protective side wall 12 can provide an effective protective effect on the target side. For example, it can prevent the user from accidentally reaching the area where the cutting mechanism 3 is located with a hand or a foot and contacting the cutting mechanism 3, and can also prevent the carrying fingers from contacting the cutting mechanism 3 when the user needs to carry the intelligent mower by hand. The parts of the first protective cover 1 is provided with notches 6 corresponding to the front side and the rear side of the equipment body, so that the cutting mechanism 3 is partially exposed outside the first protective cover 1. When the equipment body travels along the forward direction, the exposed part of the cutting mechanism 3 at the notch 6 on the front side can effectively cut the grass. When the equipment body moves along the backward direction, the exposed part of the cutting mechanism 3 at the notch 6 on the rear side can effectively cut the grass.

As shown in FIGS. 2a and 2b, to improve the protective effect of the first protective side wall 12, a bottom of the first protective side wall 12 corresponding to the target side of the equipment body is provided with a folded edge 122 that is lower than the cutting mechanism 3 and extends toward an inner side of the first protective cover 1. In addition, there is a gap between the end of the folded edge 122 and the cutting area of the cutting mechanism 3 in a horizontal direction, which can also be regarded as a gap between the end of the folded edge 122 and the tool nose circle. This gap can enable the cutting mechanism 3 to cut to the lawn edge when trimming the lawn. Specifically, when the equipment body travels along the edge of the lawn, the grass at the edge of the lawn can extend into the area where the cutting mechanism 3 is located (the cutting area) through the gap, and the rotating cutting mechanism 3 can cut off the grass, so that the intelligent mower can cut to the lawn edge when trimming the lawn. In addition, due to the existence of the gap, weeds are not easy to accumulate in the area where the cutting mechanism 3 is located, and the cut weeds can be discharged through the notch instead of accumulating inside the first protective cover 1. In a specific embodiment, the cutting mechanism 3 is a rotatable cutterhead, and the cutterhead is provided with cutting tools protruding from the edge of the cutterhead. When the cutterhead rotates, the cutting edge of the cutting tool will have cutting force, so that the grass can be cut off thereby. The cutting area mentioned above may be the entire area covered by the cutterhead and the cutting tool when they rotate, or may be the annular area formed by the cutting tool when it rotates. The tool nose circle formed by the cutting tool when it rotates can be regarded as the outer edge of the annular cutting area.

Referring to FIGS. 2a, 2b and 3, in an embodiment provided by the present application, the first protective cover 1 includes a first upper protective wall 11. The first protective side wall 12 is located at the edge of the first upper protective wall 11. The first upper protective wall 11 can prevent the cut grass from splashing everywhere, and make the cut grass discharged from the bottom and the notches 6 on both sides of the first protective cover 1. The above-mentioned first protective cover 1 being arranged above the cutting mechanism 3 can be interpreted as that the first upper protective wall 11 being arranged over the cutting mechanism 3, and the first protective side wall 12 being located on peripheral sides of the cutting mechanism 3.

Further, the first protective side wall 12 may be rectilinear or arc-shaped. For example, in an embodiment provided by the present application, the first protective side wall 12 is arranged in an arc shape on an outer side of an arc segment of the tool nose circle of the cutting mechanism 3, and the radius of curvature of the first protective side wall 12 is larger than the radius of the tool nose circle. The plane where the tool nose circle is located can be regarded as the above-mentioned cutting surface. The first protective side wall 12 extends toward the ground. The first protective side wall 12 can not only protect the user but also protect the rotating cutting mechanism 3.

The first protective side wall 12 can adapt to the shape of the cutting mechanism 3 and also adapt to the shape of the equipment body. For example, when the equipment body is square, the first protective side wall 12 can be rectilinear, and the first protective side wall 12 is arranged on one side of the cutting mechanism 3 in parallel with a tangent line of the cutting mechanism 3 (parallel to the length direction of the equipment body). When the equipment body is circular, the first protective side wall 12 can be arc-shaped.

Referring to FIGS. 2a and 2b, the first protective side wall 12 can effectively prevent the user from accidentally contacting the cutting mechanism 3 from the first direction (direction A in FIG. 1), and the folded edge 122 can effectively prevent the user from accidentally contacting the cutting mechanism 3 from the second direction (direction B in FIG. 1). In a specific embodiment, the folded edge 122 is perpendicularly connected to the bottom of the first protective side wall 12, and the cross-section of the first protective side wall 12 is roughly L-shaped. In addition, the included angle between the folded edge 122 and the first protective side wall 12 can also be an obtuse angle or an acute angle.

In specific implementation, the length r of the folded edge 122 can be 5.9mm-22mm. That is, as shown in FIG. 2a, the dimension r from the end (i.e., the inner end) of the folded edge 122 to the outer side wall surface of the first protective side wall 12 can be 5.9mm-22mm. For example, r can be 11mm or 21mm.

The folded edge 122 extends toward the cutting mechanism 3, and the end of the folded edge 122 can be located on an outer side relative to the tool nose of the cutting tool on the cutting mechanism 3. There is a gap between the end of the folded edge 122 and the tool nose. As shown in the example in FIG. 2a, the gap I can be 0.1mm-5mm. Because of the existence of this gap, it can not only provide safer protection to meet requirements, but also reduce the probability of weed accumulation. In addition, the grass at the edge of the lawn can also extend into the area where the cutting mechanism 3 is located through the gap, so as to be effectively cut by the cutting mechanism, realizing the function of cutting to the lawn edge.

Further, the folded edge 122 is located on the side of the cutting mechanism 3 facing the ground. The edge surface of the folded edge 122 facing the ground can be regarded as the outer edge surface, and the edge surface opposite to the outer edge surface can be regarded as the inner edge surface. Referring to FIG. 3, in the vertical direction, there is a gap M between the inner edge surface of the folded edge 122 and the cutting tool. In a specific embodiment, the value range of the distance M between the inner edge surface of the folded edge 122 and the cutting tool can be 4mm-10mm. For example, the distance M can be 7mm. Setting a gap between the inner edge surface of the folded edge 122 and the cutting tool can not only effectively improve the debris removal capacity of the cutting mechanism 3 but also prevent the debris accumulated on the folded edge 122 from being cut twice and resulting in additional resistance.

In the horizontal direction, a distance J between the tool nose of the cutting tool and the first protective side wall 12 is 6mm-27mm, as shown in FIG. 2a. For example, the distance J can be 10mm. Continuing to refer to FIG. 2a, a distance h between the bottom of the first protective side wall 12 and the ground can be 30mm-40mm. For example, the distance h can be 36mm. A distance H between the cutting mechanism 3 and the ground can be 40mm-50mm. For example, the distance H can be 46mm. It should be noted that the cutting mechanism 3 of some intelligent mowers can be liftable. If the cutting mechanism of the intelligent mower in this embodiment is a liftable cutterhead, the above distance H refers to the dimension when the cutting mechanism 3 is in the lowest position.

Referring to FIG. 1, the projection of the notch at the part of the first protective cover 1 corresponding to either the front side or the rear side of the equipment body on the plane where the cutting mechanism 3 is located has two notch endpoints. The notches on the front side and the rear side can be symmetrical relative to a reference axis. The reference axis passes through a center of the cutting mechanism and is parallel to the travel direction of the intelligent mower. In one embodiment, there is no part of first protective side wall at the notches on the front side and the rear side of the first protective cover 1. The shape and size of the first upper protective wall 11 of the first protective cover 1 are similar to those of the cutting mechanism 3. For example, the shape and size of the first upper protective wall 11 of the first protective cover 1 are the same as those of the cutting mechanism 3, or slightly smaller than those of the cutting mechanism 3. More specifically, as shown in the example in FIG. 1, the cutting mechanism 3 comprises a turntable 8 and a cutting tool 4. The size of the first upper protective wall 11 can be the same as that of the tool nose circle of the cutting tool 4, or the size of the first upper protective wall 11 can be the same as that of the turntable 8. In another embodiment, there is no part of first protective side wall and no part of first upper protective wall at the notches on the front side and the rear side of the first protective cover 1, so that when looking down from above the first protective cover 1, the parts of the cutting mechanism corresponding to the notches are exposed. For the latter embodiment, the upper side of the exposed parts of the cutting mechanism can be shielded by the shell of the equipment body or by arranging another protective cover above the first protective cover.

As shown in FIG. 1, the two endpoints of the notch are respectively point A and point B in the figure. In a specific embodiment, a central angle α corresponding to connection lines from the two notch endpoints A and B to the center point of the cutting mechanism 3 can be 65-85 degrees. For example, the central angle α is 74 degrees. The more the cutting mechanism is exposed, the higher the danger. In this embodiment, the exposed part of the cutting mechanism is restricted within the above central angle range, which balances the mowing effect and the safety.

Referring to FIGS. 1 to 3, another intelligent mower is provided in yet another embodiment of the present application, which comprises an equipment body, a cutting mechanism 3, a first protective cover 1 and a second protective cover 2. In the width direction of the equipment body, the equipment body has a left side and a right side. The cutting mechanism 3 is eccentrically arranged at a bottom of the equipment body and close to a target side of the equipment body, and the target side is the left side or the right side. The first protective cover 1 is arranged above the cutting mechanism 3, and the first protective cover 1 has a first protective side wall 12 extending downward. A bottom of the first protective side wall 12 is lower than a cutting tool on the cutting mechanism 3. The second protective cover 2 is arranged above the first protective cover 1, and a part of the second protective cover 2 corresponding to the target side of the equipment body is provided with a second protective side wall 22 extending downward. The second protective cover 2 extends a distance between the target side of the equipment body and the cutting tool in the horizontal direction. The second protective side wall 22 is located outside the first protective side wall 12 and there is a gap K between the second protective side wall 22 and the first protective side wall 12. The gap K can be 5mm-20mm, for example, K=16mm or K=8mm.

In some embodiments, the bottom of the second protective side wall 22 is higher on the outer side and lower on the inner side. For example, the bottom of the second protective side wall 22 is an inclined surface or a stepped surface that is higher on the outer side and lower on the inner side. The thickness of the second protective side wall 22 can be 25mm-35mm.

As shown in FIGS. 2a and 3, the horizontal distance F between the tool nose of the cutting tool of the cutting mechanism 3 and the outer surface of the second protective side wall 22 can be 55mm-100mm. For example, F=60mm or F=90mm.

In a specific embodiment, the second protective side wall 22 may comprises multiple layers of side walls. For example, in the examples shown in FIGS. 2a, 2b and 3, the second protective side wall 22 comprises two layers of side walls, which are referred to as a double-layer side wall here. The double-layer side wall may comprise an inner protective wall 221 located on an inner side and an outer protective wall 222 located on an outer side. A bottom of the outer protective wall 222 is higher than a bottom of the inner protective wall 221. Taking the ground as the reference, the distance between the bottom of the outer protective wall 222 and the ground is greater than the distance between the inner protective wall 221 and the ground.

A height difference D4 between the outer protective wall 222 and the inner protective wall 221 can be 3mm-20mm. For example, in the example shown in FIG. 3, D4=5mm. In the example shown in FIG. 4, D4=15mm.

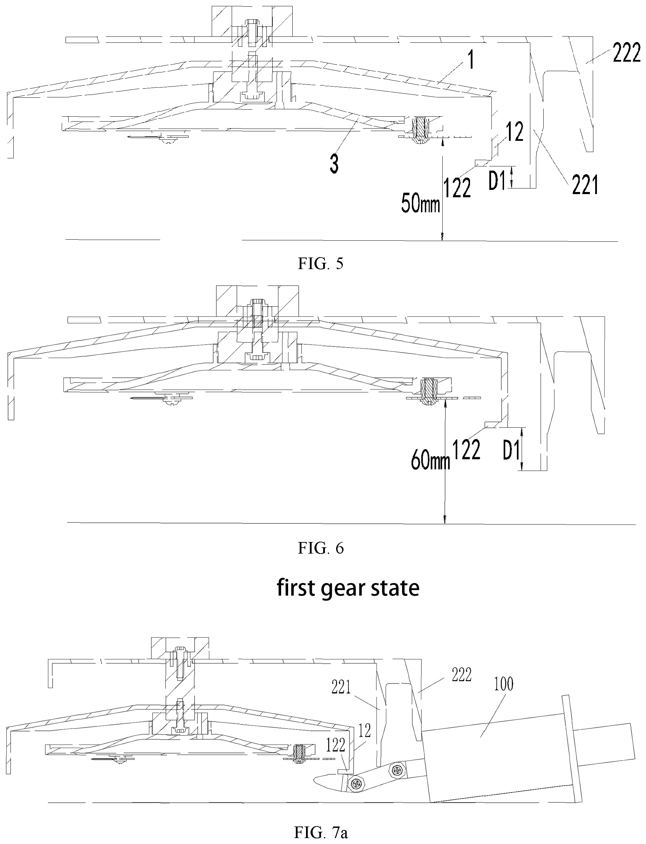

In some achievable technical solutions, the cutting mechanism 3 and the first protective cover 1 of the intelligent mower is liftable so as to adapt to various working conditions. As shown in FIGS. 2a and 3, the cutting mechanism 3 and the first protective cover 1 are in the first gear state, such as the gear position where the cutting mechanism 3 is 30mm away from the ground. At this time, the bottom of the first protective side wall 12 is lower than the inner protective wall 221, and a height difference D1 therebetween can be 7mm-10mm. As shown in FIG. 4, the cutting mechanism 3 and the first protective cover 1 are in the second gear state, assuming that the cutting mechanism 3 is 40mm away from the ground; at this time, there is almost no height difference between the bottom of the first protective side wall 12 and the bottom of the inner protective wall 221. As shown in FIG. 5, the cutting mechanism 3 and the first protective cover 1 are in the third gear state, assuming that the cutting mechanism 3 is 50mm away from the ground; at this time, the bottom of the first protective side wall 12 is higher than the inner protective wall 221, and the height difference D1 between the first protective side wall 12 and the inner protective wall 221 can be 8mm-12mm. As shown in FIG. 6, the cutting mechanism 3 and the first protective cover 1 are in the fourth gear state, assuming that the cutting mechanism 3 is 60mm away from the ground; at this time, the bottom of the first protective side wall 12 is higher than the inner protective wall 221, and the height difference D1 between the first protective side wall 12 and the inner protective wall 221 can be 18mm-22mm.

It can be seen from the above FIGS. 2a, 3, 4, 5 and 6 that in the state shown in FIGS. 2a and 3 and the state shown in FIG. 4, the inner protective wall 221 of the second protective cover 2 is higher than or flush with the first protective side wall 12 of the first protective cover 1. For example, a person's foot, hand, etc., can easily extend from the bottom of the second protective cover 2 to the first protective side wall 12. Due to the effect of the folded edge 122 at the bottom of the first protective side wall 12, the depth of extending into the bottom of the equipment body is lengthened. Even if a person's fingers extend under the folded edge, they are very unlikely to touch the cutting tool above because they are stopped by the folded edge. In the states shown in FIGS. 5 and 6, the inner protective wall 221 of the second protective cover 2 is lower than the first protective side wall 12, and the cutting tool and the first protective cover 1 are located higher than the inner protective wall 221 of the second protective cover 2, so the safety is sufficient. For example, a person's hand, foot, etc., is very unlikely to touch the cutting tool.

The wall thicknesses of the inner protective wall 221 and the outer protective wall 222 can be equal or unequal. FIGS. 2a and 3 show the case where the wall thicknesses of the inner protective wall 221 and the outer protective wall 222 are equal. FIG. 2a shows that the second protective cover comprises a second upper protective wall 21 and a second protective side wall 22 which are of an integral structure. The second protective side wall 22 can form the inner protective wall 221 and the outer protective wall 222 by means of an integral molding process or a material reduction process. In the example shown in FIG. 3, the second upper protective wall 21 and the inner protective wall 221 can be of an integral structure, and the outer protective wall 222 can be connected to the inner protective wall through an intermediate piece. As shown in FIG. 3, the intermediate piece can be a member similar to an "n" shape.

The wall thicknesses of the inner protective wall 221 and the outer protective wall 222 should not be too thin, as being too thin is prone to deformation and reduces safety, nor should they be too thick, as being too thick results in a large mass. As shown in FIG. 3, for example, the wall thickness M of the inner protective wall can be 2mm-8mm, and the wall thickness N of the outer protective wall can be 2mm-8mm. In the example shown in FIG. 2a, the wall thicknesses of the inner protective wall 221 and the outer protective wall 222 are both 6.5mm. In the example shown in FIG. 3, the wall thicknesses of the protective wall 221 and the outer protective wall 222 are both 3mm.

A gap V between the inner protective wall 221 and the outer protective wall 222 can be 15mm-30mm. For example, V=18mm as shown in FIG. 2a. V=25mm as shown in FIG. 3. The gap provided between the inner protective wall 221 and the outer protective wall 222 can effectively increase the thickness of the second protective side wall 22, thereby making the protective effect of the second protective cover 2 better.

Further, as shown in FIG. 2a, the inner protective wall 221 can be of a structure that is thicker at the top and thinner at the bottom. Referring to FIG. 2a, the inner surface of the outer protective wall 222 is provided with a first inclined surface that is near the bottom and facing the inner protective wall 221, so that the thickness of the outer protective wall 222 narrows from top to bottom. The outer surface of the inner protective wall 221 is provided with a section of second inclined surface that is at the height corresponding to the first inclined surface and facing the outer protective wall 222, so that the thickness of the inner protective wall 221 narrows from top to bottom, and then further extends downward with the narrowed thickness.

In this embodiment, the second protective cover 2 can be an upper cover of the equipment body or a base of the equipment body. Further, if the second protective cover 2 is the base of the equipment body, the first protective cover 1 and the cutting mechanism 3 are arranged on the base, and the first protective cover 1 and the cutting mechanism 3 can move up and down synchronously relative to the base. Specifically, the first protective cover 1 and the cutting mechanism 3 can move relative to the base to change the distance between the cutting mechanism 3 and the ground, and then the user can adjust the distance between the cutting mechanism 3 of the intelligent mower and the ground according to the required mowing height.

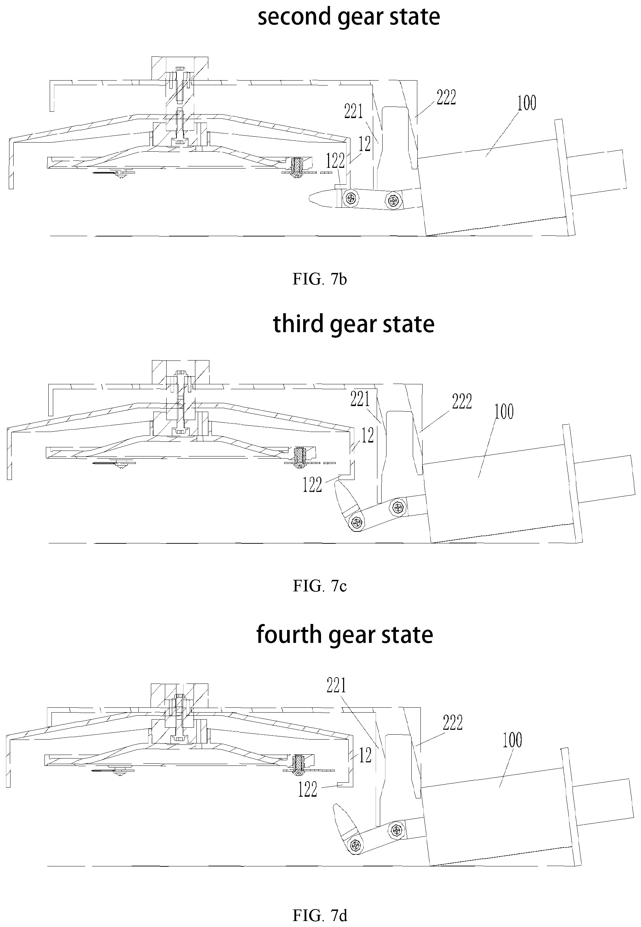

The way of protection provided by the solution of this embodiment will be described below in combination with specific scenarios. Referring to the examples shown in FIGS. 7a-7d, a mechanical handling finger is used to simulate a human finger in the figures. In the first gear state, as shown in FIG. 7a, the wrist of the handling finger 100 is stopped by the outer protective wall 222 and the inner protective wall 221, and the first knuckle can only extend to the bottom of the folded edge 122, the finger cannot bend upward further due to the stop effect of the folded edge 122, so it will not touch the cutting tool. In the second gear state, as shown in FIG. 7b, similar to the first gear state, the first knuckle extends to the bottom of the folded edge 122, and the finger cannot bend upward further due to the stop effect of the folded edge 122, so it will not touch the cutting tool. In the third and fourth gear states, as shown in FIGS. 7c and 7d, the wrist of the handling finger 100 is stopped outside by the outer protective wall 222 and the inner protective wall 221, and the finger can extend into the inner side of the second protective cover, but the cutting tool and the first protective cover 1 are both located higher, and even if the finger bends upward, the finger still cannot touch the cutting tool due to the existence of the folded edge 122.

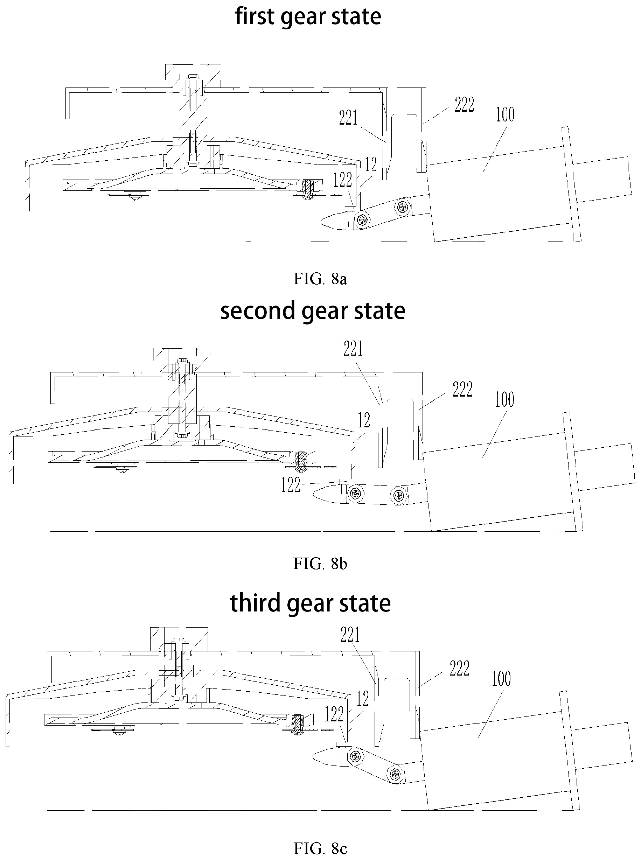

FIGS. 7a-7d show finger protection state diagrams corresponding to the second protective side wall 22 of the structure shown in FIG. 2a. The height difference between the inner protective wall 221 and the outer protective wall 222 in the second protective side wall of the structure shown in FIG. 2a is greater than that in the structure shown in FIG. 3. FIGS. 8a-8d show finger protection state diagrams corresponding to the second protective side wall 22 of the structure shown in FIG. 3. It can be seen from FIGS. 8a-8d that the inner protective wall 221 plays a role of increasing the thickness of the second protective side wall to lengthen the depth of hand insertion. The situations of the fingers in different gear states are similar to those described in the above FIGS. 7a-7d, which will not be repeated herein.

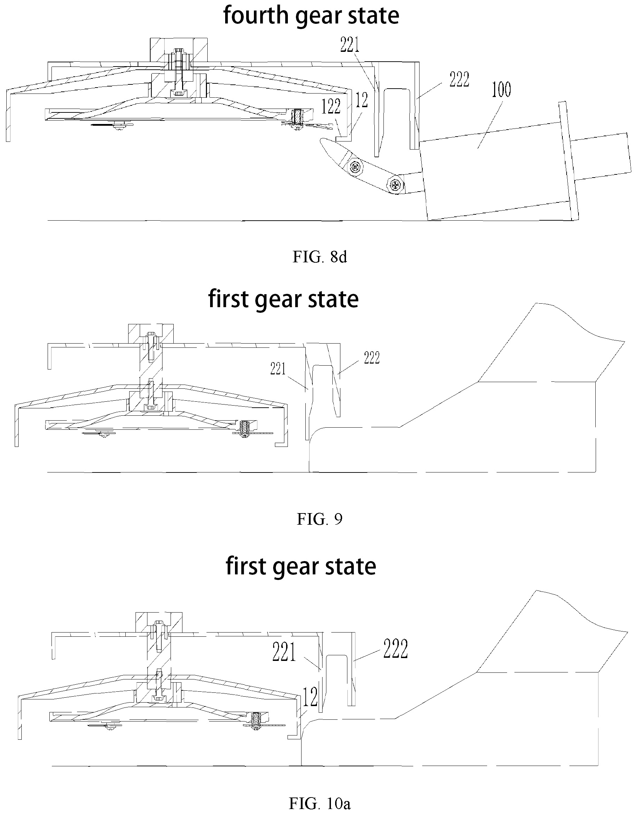

It should be supplemented herein that the cutting mechanism 3 of some intelligent mowers is obliquely arranged. The front side of the cutting mechanism is slightly higher than the rear side of the cutting mechanism, or the rear side of the cutting mechanism is slightly higher than the front side of the cutting mechanism. The front side of the cutting mechanism corresponds to the front side of the equipment body of the intelligent mower, and the rear side of the cutting mechanism corresponds to the rear side of the equipment body of the intelligent mower. FIG. 8d shows that when the cutting mechanism is obliquely arranged and the cutting tool is in an inclined state, the handling finger simulating a human finger is also not easy to touch the cutting tool due to the existence of the folded edge, which shows that the solution provided by the embodiments of the present application has a good protective effect.

FIG. 9 shows an adult foot protection state diagram corresponding to the second protective side wall 22 of the structure shown in FIG. 2a. The size of the adult foot in FIG. 9 is a statistical value, such as the average value of 85% of adult feet, which is not specifically limited in this embodiment. As shown in FIG. 9, the adult foot is directly stopped by the inner protective wall 221 and cannot extend further inward. Therefore, regardless of the gear state of the cutting tool on the cutting mechanism and the first protective cover, the adult foot will always be stopped by the inner protective wall 221.

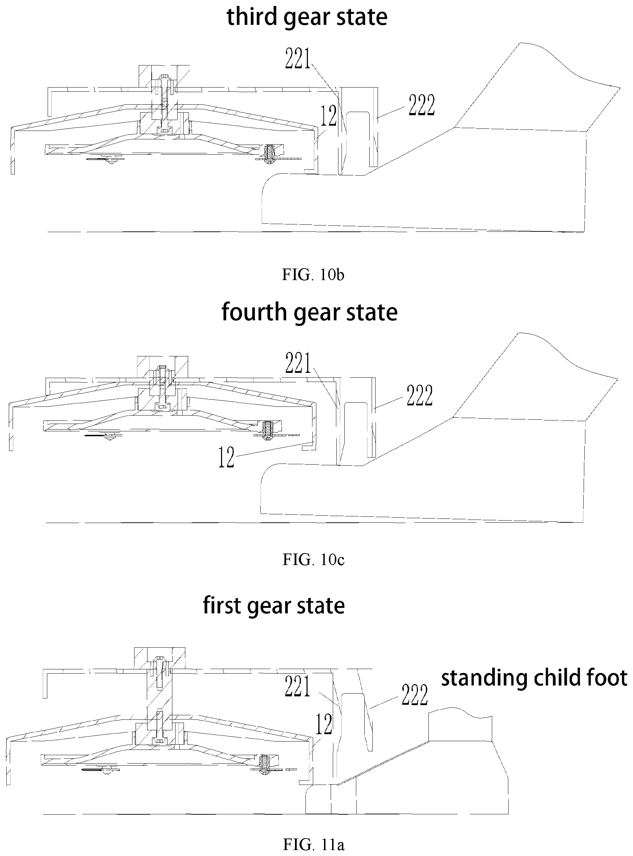

FIGS. 10a-10c show adult foot protection state diagrams corresponding to the second protective side wall 22 of the structure shown in FIG. 3 (with a small height difference between the inner protective wall and the outer protective wall). In the first gear state, as shown in FIG. 10a, the adult foot is stopped by the first protective side wall 12. In the second gear state, not shown in the figure, similar to the first gear state, since the first protective cover and the cutting tool do not rise much, the adult foot is still stopped by the first protective side wall 12. In the third gear state, as shown in FIG. 10b, due to the height lifting of the cutting tool and the first protective cover, the adult foot can extend further inward, but due to the stop of the inner protective wall 221 and the outer protective wall 222 and the effect of the folded edge on the first protective side wall 12, the adult foot cannot touch the cutting tool. In the fourth gear state, as shown in FIG. 10c, the inner protective wall 221 and the outer protective wall 222 limit the depth of the adult foot's insertion, and the position of the cutting tool is relatively high, so the adult foot cannot touch the cutting tool.

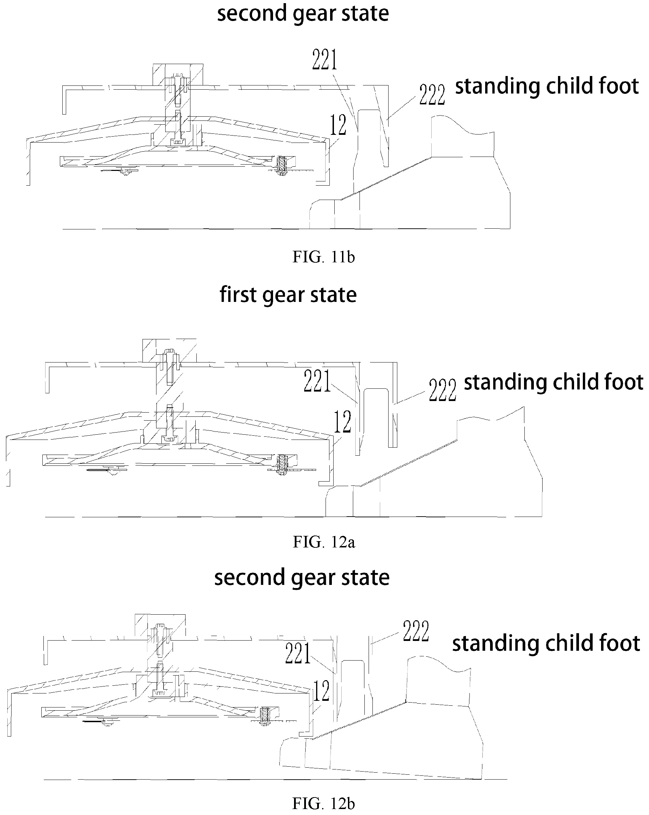

FIGS. 11a and 11b show standing child foot protection state diagrams corresponding to the second protective side wall 22 of the structure shown in FIG. 2a. A child's foot is smaller than an adult's foot in height and length. In the first gear state, as shown in FIG. 11a, neither the inner protective wall 221 nor the outer protective wall 222 can play a stopping role, but the first protective side wall 12 can stop the child's foot from extending further inward. In the second gear state, as shown in FIG. 11b, the height of the cutting tool and the first protective cover is increased, and the child's foot is not stopped by the first protective side wall 12 and can extend further inward, but the longer inner protective wall 221 limits the insertion depth. The child's foot is inserted not much and the height of the cutting tool is increased, so the child's foot cannot touch the cutting tool. The same applies to the third and fourth gear states.

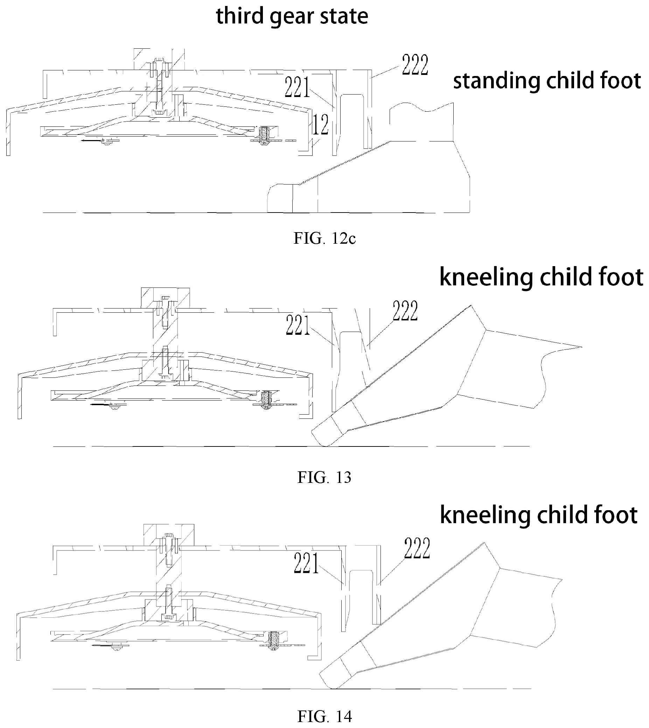

FIGS. 12a-12c show standing child foot protection state diagrams corresponding to the second protective side wall 22 of the structure shown in FIG. 3. In the first gear state, as shown in FIG. 12a, since the gap heights of both the inner protective wall 221 and the outer protective wall 222 from the ground are large and cannot play a stopping role, the first protective side wall 12 stops the child's foot. In the second gear state, as shown in FIG. 12b, the height of the cutting tool and the first protective cover is increased, and the child's foot can extend further inward, with the front end of the child's foot located on the lower side of the folded edge of the first protective side wall 12. Even if the child's foot can tilt upward because the gap heights of both the inner protective wall and the outer protective wall from the ground are large, the folded edge will stop the child's foot from touching the cutting tool. In the third gear state, as shown in FIG. 12c, the height of the cutting tool and the first protective cover is further increased, providing more space at the bottom, and the child's foot can extend further inward, but the height of the cutting tool is relatively high, so the child's foot cannot touch the cutting tool. The same applies to the fourth gear state.

FIG. 13 shows a kneeling child foot protection state diagram corresponding to the second protective side wall 22 of the structure shown in FIG. 2a. FIG. 14 shows a kneeling child foot protection state diagram corresponding to the second protective side wall 22 of the structure shown in FIG. 3. In the first gear state, due to the stop of the inner protective wall 221 and the outer protective wall 222, the kneeling child's foot cannot touch the cutting tool. The same applies to the second, third and fourth gear states.

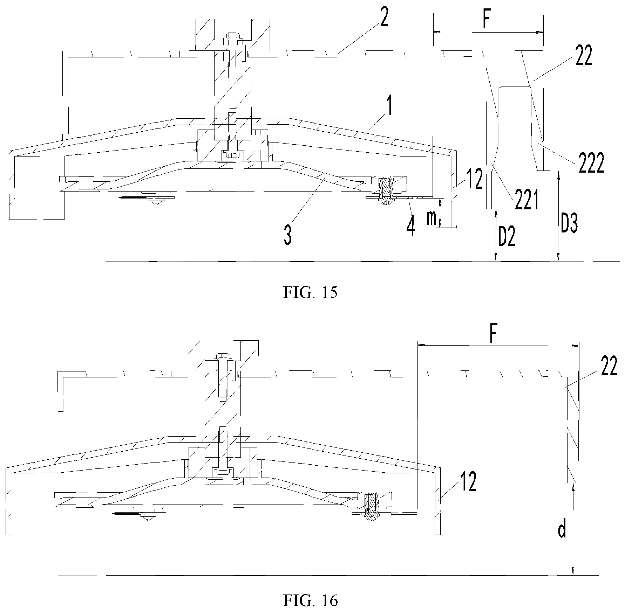

If the structure and size of the second protective cover are designed properly, it is also possible to meet the safety regulations and protection requirements without setting a folded edge on the first protective side wall of the first protective cover. That is, the present application also provides an intelligent mower. As shown in FIG. 15, the intelligent mower comprises an equipment body, a cutting mechanism 3, a first protective cover 1 and a second protective cover 2. In the travel direction of the equipment body, the equipment body has a front side and a rear side. The cutting mechanism 3 is arranged at a bottom of the equipment body and close to a target side of the equipment body, and the target side is the front side or the rear side. The first protective cover 1 is arranged above the cutting mechanism 3, and the first protective cover 1 has a first protective side wall 12 extending downward; a bottom of the first protective side wall 12 is lower than the cutting tool 4 on the cutting mechanism 3. The second protective cover 2 is arranged above the first protective cover 1, and a part of the second protective cover 2 corresponding to the target side of the equipment body is provided with a second protective side wall 22 extending downward. The second protective cover 2 extends the distance between the target side of the equipment body and the cutting tool 4 in a horizontal direction.

The second protective side wall can be a side wall with a certain thickness, or may comprises multiple layers of side walls. For example, in the example shown in FIG. 15, the second protective side wall 22 is a double-layer side wall. The double-layer side wall comprises an inner protective wall 221 located on an inner side and an outer protective wall 222 located on an outer side. The bottom of the outer protective wall 222 is higher than a bottom of the inner protective wall 221. Referring to the content described above, the intelligent mower has multiple gear states, such as the first, second, third, fourth gear states, etc. Among them, in the first gear state, the height of the cutting tool 4 and the first protective cover 1 from the ground is the smallest, and such heights in the second, third, and fourth gear states increase in sequence. For example, in the first gear state, the bottom of the inner protective wall 221 is higher than the bottom of the first protective side wall 12, as shown in the state in FIG. 15.

Compared with the above-mentioned embodiments, the first protective cover in this embodiment has no folded edge, so in this embodiment, it is necessary to restrict the heights of both the inner protective wall and the outer protective wall from the ground to achieve a better protective effect. For example, in an achievable technical solution, a height D2 of the bottom of the inner protective wall 221 from the ground can be 24mm-26mm; such as D2=25mm. A height D3 of the bottom of the outer protective wall 222 from the ground is 42mm-46mm; such as D3=45mm. In the horizontal direction, a distance F between the outer surface of the outer protective wall and the tool nose of the cutting tool is 58mm-62mm, such as F=60mm.

Further, a height difference m between the bottom of the first protective side wall 12 and the cutting tool 4 is 7mm-15mm. For example, m=14mm.

In another achievable technical solution, similar to the structure of the second protective side wall shown in FIG. 3 above, the height difference between the inner protective side wall and the outer protective side wall is not large. Since there is no folded edge on the first protective cover, the thickness of the second protective side wall can be increased and/or the horizontal distance between the second protective side wall and the cutting tool can be increased. Increasing the thickness of the second protective side wall will increase the overall mass of the equipment body. Therefore, in this embodiment, as shown in FIG. 16, a height d of the bottom (i.e., the lowest point) of the second protective side wall from the ground is 43mm-46mm; for example, d=45mm. Correspondingly, in the horizontal direction, a distance F between the outer surface of the outer protective wall and the tool nose of the cutting tool is 88mm-92mm. For example, F=90mm.

Further, in each of the above embodiments, the cutting tool 4 may extend outward in the horizontal direction or may extend outward in an inclined direction. For example, in FIG. 8d, when the cutting tool 4 extends obliquely outward, an included angle s between the inclined extending direction of the cutting tool 4 and the horizontal direction is in the range of 5 degrees to 15 degrees. Arranging the cutting tool 4 in an inclined manner can effectively improve the debris removal function of the cutting mechanism 3.

The intelligent mower in the present application may be a lawn mowing robot or a manual mower, etc.

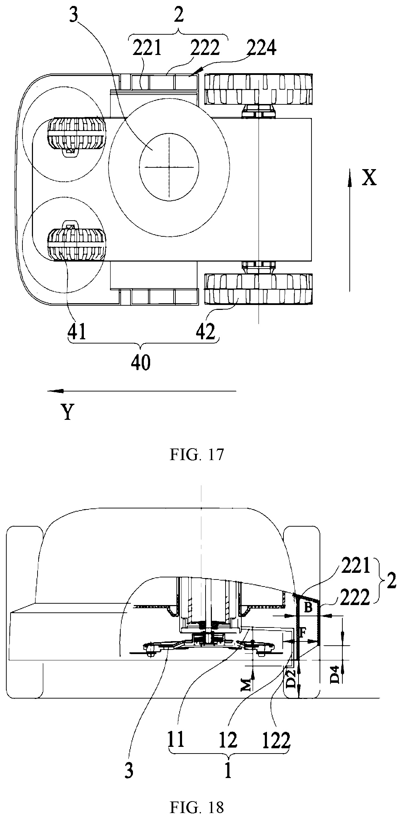

FIG. 17 is a structural schematic diagram of an intelligent mower with a cutting area located inside provided by an embodiment of the present application, as shown in FIG. 17.

In another embodiment of the present application, an intelligent mower is further provided. The mower comprises an equipment body and a cutting mechanism 3. The cutting mechanism 3 is arranged at the bottom of the equipment body. The bottom of the equipment body is also provided with a traveling wheel set 40 that drives the equipment body to move. The traveling wheel set 40 includes a front wheel set 41 and a rear wheel set 42. The front wheel set 41 is a direction control wheel set that can rotate 360 degrees, and the rear wheel set 42 is a driving wheel set that can provide forward propulsion power. When the traveling wheel set 40 drives the equipment body to move, the cutting mechanism can cut and trim the grass in the target area that has been passed by.

To prevent the cutting mechanism 3 from injuring people when the intelligent mower is in working condition, the cutting mechanism 3 is often arranged in the center of the bottom of the equipment body. There is a certain distance between the end of the cutting mechanism 3 and the edge of the peripheral side of the equipment body, which is the safety distance. When a person's limb accidentally extends into the bottom of the intelligent mower, no harm will be caused to the person within the safety distance. Therefore, to make the intelligent mower safer, the larger the safety distance, the better. However, when the intelligent mower travels to the edge of the target area to be cut, if there is an obstacle such as a fence or a wall at the edge of the target area to be cut, for the safety of the intelligent mower, there will be a certain traveling gap between the intelligent mower and the obstacle during traveling. Then the grass in the area of the safety distance and in the traveling gap area cannot be cut by the intelligent mower, resulting in the problem of a lot of residual grass at the boundary of the target area to be cut.

To solve the above problem, in an achievable embodiment of the present invention, along the traveling direction of the equipment body, the equipment body has a front side, a rear side, a left side and a right side. The front side is located in the direction of arrow Y in FIG. 17, and the right side is located in the direction of arrow X in FIG. 17. In the width direction of the equipment body, the equipment body has a left side and a right side. The cutting mechanism 3 is located between the front wheel set 41 and the rear wheel set 42 and positioned close to the right side or the left side of the bottom of the equipment body. The target side can be the left side or the right side, or both the left side and the right side of the equipment body can be target sides. The cutting mechanism 3 has a first cutting area relative to the equipment body. The first cutting area can be regarded as the area that can be cut by the cutting tool on the cutting mechanism 3 when the cutting mechanism 3 rotates, and the edge of the first cutting area is the tool nose circle formed when the cutting tool rotates. Since the cutting mechanism 3 is eccentrically arranged on the target side of the equipment body, when the intelligent mower travels along the edge of the area to be cut, the cutting mechanism 3 can be closer to the edge of the area to be cut, and can fully cut the grass at the edge of the area to be cut, thereby ensuring minimal residual grass at the boundary of the area to be cut and making the grass be cut more cleanly in the area to be cut.

FIG. 18 is a partial cross-sectional view of an intelligent mower provided by an embodiment of the present application, please refer to FIG. 18 in combination with FIG. 17.

At the same time, to ensure the safety protection of the intelligent mower for people, the intelligent mower further comprises a second protective cover 2 located outside the cutting mechanism 3 and having an inner protective wall 221 and an outer protective wall 222. A height of the inner protective wall 221 from the ground is lower than a height of the outer protective wall 222 from the ground, and there is a gap between the inner protective wall 221 and the outer protective wall 222. The gap can be a carrying groove 224 that can accommodate a person's fingers to enter, thus defining the width of the second protective cover 2, that is, the second protective cover 2 extends the distance between the target side of the equipment body and the cutting mechanism 3 in the horizontal direction.

In addition, the height of the inner protective wall 221 is lower than the height of the outer protective wall 222, that is, the bottom of the second protective cover 2 is an inclined surface. Then, when a person's foot extends into the bottom of the equipment body from the target side, although the position of the toe can extend into the inner side of the outer protective wall 222, the inner protective wall 221 can block the foot from extending further, thereby ensuring that the person's foot will not be injured. Or, when a person's hand extends into the bottom of the equipment body from the target side, if the wrist is blocked by the outer protective wall 222, the wrist will bend downward, and the palm will extend downward or obliquely downward. Due to the certain width of the second protective cover 2, the finger pad will abut against the bottom of the inner protective wall 221 at this time and cannot touch the cutting area; if the wrist is not blocked by the outer protective wall 222, due to the inclined bottom of the second protective cover 2, the person's hand will extend obliquely downward into the bottom of the equipment body along the extending direction of the bottom of the second protective cover 2. During the extending process, the hand cannot directly touch the cutting area but will be blocked by the inner protective wall 221. Generally, when a person perceives the blockage of the inner protective wall 221, he/she will immediately withdraw his/her hand to avoid touching the cutting area.

It should be noted that it is common general knowledge that the cutting mechanism 3 is arranged at the bottom of the intelligent mower. Generally, when the intelligent mower is working, a person will not intentionally extend his/her limb into the bottom of the intelligent mower. The extending of a limb into the bottom of the intelligent mower is usually an unconscious behavior. Then, the inclined bottom of the second protective cover 2 can prompt the user that his/her limb or other body parts have entered the bottom of the intelligent mower by means of touch perception when the user's limb extends into the bottom of the intelligent mower. Generally, after perceiving the prompt, the user will pull out the limb parts that have entered the bottom of the intelligent mower from the bottom of the equipment body, thereby ensuring safety.

In this embodiment, the width of the second protective cover 2 is B, and B>20mm. The length of an adult's hand is about 20mm. The setting of B>20mm can effectively interfere with the insertion of the human hand into the bottom of the intelligent mower and give a prompt to the person.

In this embodiment, the distance between the outer protective wall 222 and the cutting area is F, and 30mm≤F≤55mm, and F>B, so that there is a certain distance between the cutting mechanism 3 and the second protective cover 2, thereby preventing the second protective cover 2 from interfering with the rotational operation of the cutting mechanism 3, and also preventing a human arm from entering into the bottom of the equipment body and touching the cutting mechanism 3.

In this embodiment, the height difference between the bottom of the inner protective wall 221 and the bottom of the outer protective wall 222 is D4, and 10mm≤D4≤25mm.

It can be understood that if the height of the bottom of the inner protective wall 221 is smaller than the thickness of the finger, the inner protective wall 221 can ensure that the human hand cannot extend into the bottom of the equipment body, and the human hand will not be injured. However, the height of the inner protective wall 221 cannot be too low. If the height of the inner protective wall 221 is too low, it will collide with the grass in the area to be cut when the intelligent mower travels, and the grass in the area to be cut will hinder the forward movement of the intelligent mower, thereby increasing the load of the traveling wheel set 40 and causing additional power consumption. In addition, if the ground in the area to be cut is uneven, it will also adversely affect the traveling of the intelligent mower. Therefore, in this embodiment, the height of the bottom of the inner protective wall 221 is D2, and 30mm≤D2≤55mm, which not only will not cause the traveling of the intelligent mower to be adversely affected by the uneven road surface or grass but also can fully cut the grass.

The intelligent mower of this embodiment can ensure less residual grass in the area to be cut by means of motor offset. The arrangement of the carrying groove 224 of the second protective cover 2 not only provides carrying support but also defines the width of the second protective cover 2. The inclined bottom surface and width of the second protective cover 2 can ensure the usage safety for the user.

In an achievable embodiment of the present application, please refer to FIG. 18 in combination with FIG. 17. One achievable structure of the second protective cover 2 is that the second protective cover 2 can be a single wall, the bottom of the second protective side wall has a carrying groove 224, the outer side of the second protective side wall forms the outer protective wall 222, and the inner side of the second protective side wall forms the inner protective wall 221; another achievable structure of the second protective cover 2 is that the second protective side wall includes multiple layers of walls that are spaced apart, and the gap between the outermost outer protective wall 222 and the adjacent wall forms the carrying groove 224. In this embodiment, the second protective side wall has two layers of walls that are spaced apart, which are referred to as a double-layer side wall here. The double-layer side wall may comprise an inner protective wall 221 located on an inner side and an outer protective wall 222 located on an outer side. A bottom of the outer protective wall 222 is higher than a bottom of the inner protective wall 221. Taking the ground as the reference, the distance between the bottom of the outer protective wall 222 and the ground is greater than the distance between the inner protective wall 221 and the ground.

To further improve the protection of the intelligent mower for people, please refer to FIG. 18. In an achievable embodiment of the present invention, the intelligent mower further comprises a first protective cover 1. The first protective cover 1 is located between the second protective cover 2 and the cutting mechanism 3 and covers the upper part of the cutting mechanism 3. The first protective cover 1 has a first protective side wall 12 extending downward, and the bottom of the first protective side wall 12 is lower than the cutting tool on the cutting mechanism 3. When a person's limb extends into the bottom of the intelligent cutting equipment, and after touching the second protective cover 2, the person does not withdraw the limb and continues to extend the limb into the bottom of the intelligent mower, the first protective side wall can block the person's limb from contacting the cutting mechanism 3 when extending into the bottom of the intelligent mower, thereby protecting the person's limb from touching the cutting area. In addition, when there are debris such as branches in the area to be cut, and the debris continues to extend into the bottom of the intelligent mower after passing by the second protective cover 2 during the traveling process of the intelligent mower, the first protective side wall can block the debris from continuing to extend inward, thereby preventing the cutting mechanism 3 from being damaged by foreign objects.

Further, the first protective side wall 12 may be rectilinear or arc-shaped. For example, in an embodiment provided by the present application, the first protective side wall 12 is arranged in an arc shape on an outer side of an arc segment of the tool nose circle of the cutting mechanism 3, and the radius of curvature of the first protective side wall 12 is larger than the radius of the tool nose circle. The plane where the tool nose circle is located can be regarded as the above-mentioned cutting surface. The first protective side wall 12 extends toward the ground. The first protective side wall 12 can not only protect the user but also protect the rotating cutting mechanism 3.

The first protective side wall 12 can adapt to the shape of the cutting mechanism 3 and also adapt to the shape of the equipment body. For example, when the equipment body is square, the first protective side wall 12 can be rectilinear, and the first protective side wall 12 is arranged on one side of the cutting mechanism 3 in parallel with a tangent line of the cutting mechanism 3 (parallel to the length direction of the equipment body). When the equipment body is circular, the first protective side wall 12 can be arc-shaped.

In an achievable embodiment, one achievable structure of the first protective cover 1 is that the first protective cover 1 further comprises a first upper protective wall 11. One end of the first upper protective wall 11 is connected to the bottom of the equipment body, and the other end thereof located on the target side is connected to the upper end of the first protective side wall, that is, the first protective cover 1 is L-shaped.

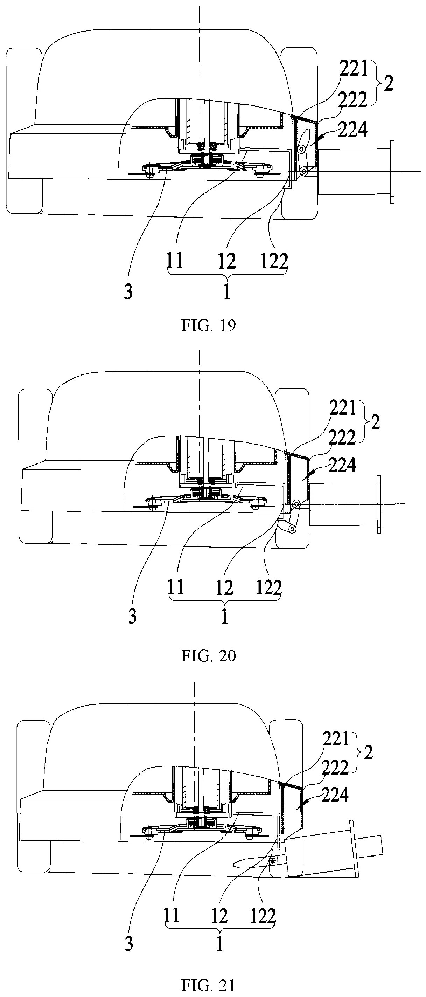

FIG. 19 is a partial cross-sectional view of simulating hand-carrying an intelligent mower provided by an embodiment of the present application, FIG. 20 is a first partial cross-sectional view of simulating a hand extending into the bottom of an equipment body provided by an embodiment of the present application, and FIG. 21 is a second partial cross-sectional view of simulating a hand extending into the bottom of an equipment body provided by an embodiment of the present application, please refer to FIGS. 19-21.

On some intelligent cutting machines, the cutterhead used for cutting can be lifted and moved. The liftable cutterhead can cut the grass to the required length according to the user's needs, and when the intelligent cutting equipment is not working, the cutterhead can be raised to the highest position, which not only ensures the safety of personnel but also ensures that the cutterhead is not easily damaged by foreign objects. The cutting mechanism 3 of this embodiment can also be a liftable cutting mechanism 3. To adapt to various working conditions, another achievable structure of the first protective cover 1 is that the first protective cover 1 comprises a first upper protective wall 11 and a first protective side wall 12. The first upper protective wall 11 is connected to the fixed shaft sleeve at the top end of the cutting mechanism 3, the end thereof located on the target side is connected to the upper end of the first protective side wall 12, the bottom of the first protective side wall 12 is provided with a folded edge 122 that is lower than the cutting mechanism 3 and extends toward the inner side of the first protective cover 1, and there is a gap between the end of the folded edge 122 and the cutting area of the cutting mechanism 3 in the horizontal direction. This gap ensures that the first protective cover 1 will not interfere with the operation of the cutting mechanism 3.

When the intelligent mower is in working condition, please refer to FIGS. 21-23. If the first protective cover 1 descends along with the cutting mechanism 3 to be lower than the inner protective wall 221 of the second protective cover 2, even if a person's limb passes by the second protective cover 2, it can be blocked by the first protective side wall 12, and even if it passes by the first protective side wall 12, due to the folded edge 122 lengthens the depth of extending into the bottom of the equipment body, a person's fingers are very unlikely to touch the cutting tool above even if they extend under the folded edge 122 because of the stop of the folded edge 122; if the first protective cover 1 descends along with the cutting mechanism 3 to be flush with the inner protective wall 221 of the second protective cover 2, the folded edge 122 can further protect the person's limb; when the intelligent mower is in non-working condition, the first protective cover 1 ascends along with the cutting mechanism 3 to make the first protective side wall 12 higher than the bottom of the inner protective wall 221. At this time, even if a person's limb passes by the second protective cover 2 and extends into the bottom of the equipment body, it will not touch the cutting area. If a person's limb bends upward after passing by the second protective cover 2, the fingertip will be blocked by the folded edge 122.

It should be noted that when the cutting mechanism 3 is not liftable, the bottom of the first protective side wall 12 can also be provided with a folded edge 122. In addition, if cutting mechanisms 3 are eccentrically arranged on both sides of the bottom of the equipment body, a first protective side wall 12 is correspondingly arranged for each eccentric cutting mechanism 3.

Further, please refer to FIG. 18. The folded edge 122 is located on the side of the cutting mechanism 3 facing the ground. The edge surface of the folded edge 122 facing the ground can be regarded as the outer edge surface, and the edge surface opposite to the outer edge surface can be regarded as the inner edge surface. In the vertical direction, the gap between the inner edge surface of the folded edge 122 and the cutting tool is M. In a specific embodiment, the value range of the distance M between the inner edge surface of the folded edge 122 and the cutting tool can be 4mm-10mm. For example, the distance M can be 7mm. Setting a gap between the inner edge surface of the folded edge 122 and the cutting tool can not only effectively improve the debris removal capacity of the cutting mechanism 3 but also prevent the debris accumulated on the folded edge 122 from being cut twice and resulting in additional resistance.

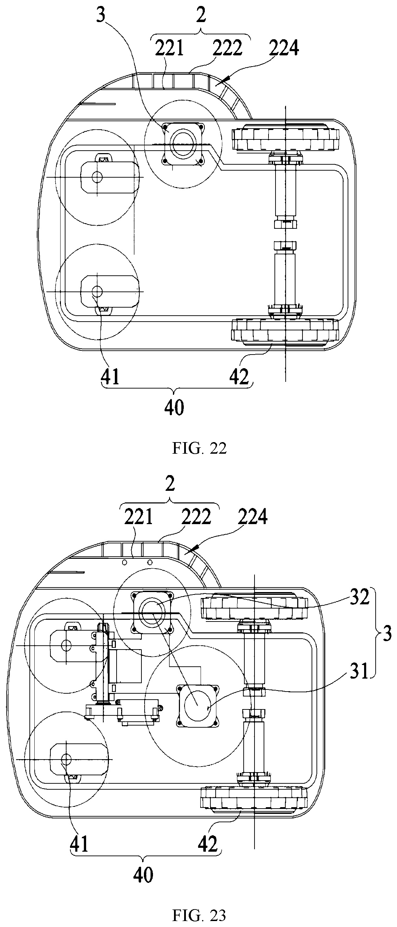

FIG. 22 is a first structural schematic diagram of an intelligent mower with a cutting area located outside provided by an embodiment of the present application, and FIG. 23 is a second structural schematic diagram of an intelligent mower with a cutting area located outside provided by an embodiment of the present application. Please refer to FIGS. 18, 22 and 23.

In an achievable embodiment of the present invention, one achievable position of the cutting mechanism 3 is that the front wheel set 41 and the rear wheel set 42 are interconnected end to end to form a closed shape. The space inside the closed shape is the inner side, and the space outside the closed shape is the outer side. That is to say, the traveling wheel set divides the bottom of the equipment body into the inner side and the outer side relative to the traveling wheel set 40. The cutting mechanism 3 is located on the inner side, and the diameter of the cutting mechanism 3 is larger than half of the width of the bottom of the equipment body. The outer side of the second protective cover 2 is flush with the corresponding outer side of the equipment body and the outer side of the rear wheel set 42. It can not only fully cut the grass in the area to be cut and ensure minimal residual grass at the boundary but also make the overall equipment body neater.

Another achievable position of the cutting mechanism 3 is that the front wheel set 41 has a front wheel rotation area relative to the equipment body, the cutting mechanism 3 has a first cutting area relative to the equipment body, and part of the first cutting area protrudes out relative to the rear wheel set 42 and the front wheel rotation area. That is to say, part of the first cutting area is located on the inner side and part of the first cutting area is located on the outer side. In this way, the first cutting area of the intelligent mower covers the grass outside the traveling wheel set 40 during traveling, further shortening the distance between the first cutting area and the boundary of the area to be mown, thereby further reducing the amount of residual grass at the boundary. To ensure safety, the outer side of the second protective cover 2 exceeds the outer side of the rear wheel set 42 to shield the first cutting area inside the second protective cover. At this time, the second protective cover 2 can be a side structure of the upper cover of the equipment body or a separate part installed on the side of the equipment body.

To increase mowing efficiency and mowing area, in an achievable embodiment of the present invention, the intelligent mower further comprises a second cutting mechanism. The second cutting mechanism has a second cutting area relative to the equipment body, the second cutting area is located inside the traveling wheel set, and a diameter of the second cutting mechanism is 1.5 times a diameter of the cutting mechanism. Since the cutting mechanism is offset to one side of the equipment body and located between the front wheel set 41 and the rear wheel set 42, the diameter of the cutting mechanism is restricted to be relatively small, and the area of the first cutting area is relatively small. However, the second cutting mechanism is located in the area inside the traveling wheel set 40 with relatively large space, so the diameter of the second cutting mechanism can be larger than that of the cutting mechanism 3. In this embodiment, the diameter of the second cutting mechanism is 1.5 times the diameter of the cutting mechanism, so the second cutting area is 3 times larger than the first cutting area. It can not only ensure minimal residual grass at the boundary of the area to be cut but also improve the cutting efficiency of the intelligent mower, shorten the working path and save electric energy.

Another achievable structure of the cutting mechanism 3 is that a cutting assembly is eccentrically arranged on each of both sides of the bottom of the equipment body, and the cutting areas of the two cutting assemblies do not interfere with each other. When encountering a narrow strip-shaped area to be cut, the intelligent cutting mechanism 3 only needs to travel once to cut all the grass on both edges, thereby improving efficiency and saving electric energy. At this time, the first protective cover 1 has a shape of Chinese character " 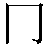 ".

As an optional solution, please refer to FIG. 23. The distance between the main cutting area and the side cutting area or between the two cutting areas is L, and L≥ 10mm. The gap of 10mm can not only accommodate installation errors but also make the two cutting areas as close as possible without interfering with each other, ensuring that the cutting range is as large as possible and the cutting is sufficient with minimal residual grass.

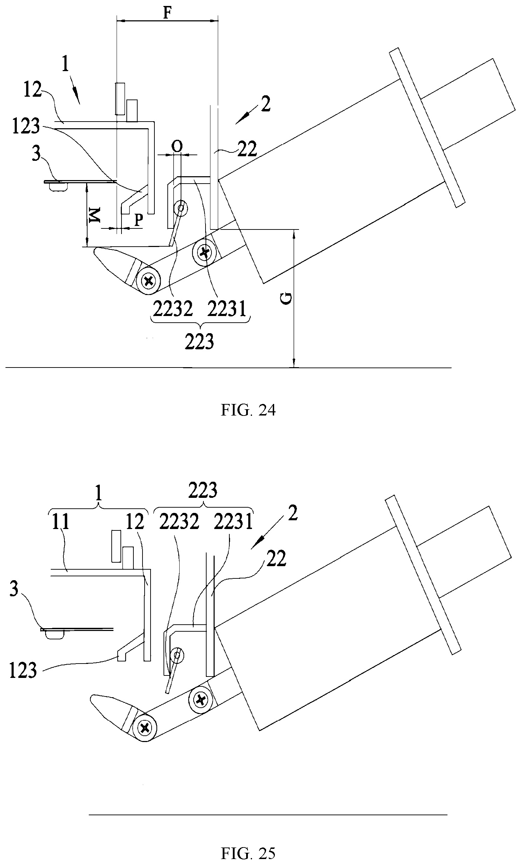

FIG. 24 is a schematic diagram of the cutting tool and the first protective cover of the intelligent mower provided by an embodiment of the present application in the gear state of 40. Please refer to FIG. 24 in combination with FIG. 1.

In yet another embodiment of the present application, an intelligent mower is further provided and comprises an equipment body, a cutting mechanism 3, a first protective cover 1 and a second protective cover 2. The cutting mechanism 3 has a cutting area relative to the equipment body. The cutting area can be regarded as the area that can be cut by the cutting tool on the cutting mechanism 3 when the cutting mechanism 3 rotates, and the edge of the cutting area is the tool nose circle formed when the cutting tool rotates. In the width direction of the equipment body, the equipment body has a left side and a right side. The cutting mechanism 3 is eccentrically arranged at a bottom of the equipment body and close to a target side of the equipment body, and the target side is the left side or the right side. The first protective cover 1 is arranged above the cutting mechanism 3, and the first protective cover 1 has a first protective side wall 12 extending downward. A bottom of the first protective side wall 12 is lower than the cutting tool on the cutting mechanism 3. The second protective cover 2 is arranged above the first protective cover 1, and a part of the second protective cover 2 corresponding to the target side of the equipment body is provided with a second protective side wall 22 extending downward. A distance between the outer surface of the second protective side wall 22 and the tool nose at the outermost end of the cutting mechanism 3 is F, and 45mm≤F≤50mm. In the embodiment, F=50mm. The larger F is, the more beneficial it is for protecting the limb extending into the bottom of the target side of the equipment body. However, the larger F is, the higher the mowing residual rate is. Therefore, under the condition of ensuring the safety of the limb, the smaller F is, the better.

It can be understood that the smaller the distance G between the bottom end of the second protective side wall 22 and the ground, the better. However, if the distance G between the bottom end of the second protective side wall 22 and the ground is too small, although it can effectively prevent the limb from extending inward, during the traveling process of the intelligent mower, the second protective side wall 22 will abut against the grass in the area to be cut, which will not only be subjected to the resistance of the grass but also be blocked by the road when passing through an uneven road, resulting in difficulty in traveling of the intelligent mower. Therefore, the distance G between the bottom end of the second protective side wall 22 and the ground cannot be too low. In this embodiment, G=60mm. Generally, the limb enters the bottom of the target side of the equipment body when a person is in a standing or squatting position. At this time, if the limb wants to extend into the bottom of the equipment body, it would extend obliquely downward from the bottom of the target side of the equipment body. G=60mm can effectively prevent the wrist from directly passing by the bottom of the equipment body obliquely downward when a person is in a standing or squatting position, and this distance also does not hinder the traveling of the intelligent mower.

To further ensure the safety of the limb extending into the bottom of the target side of the equipment body, in an achievable embodiment of the present invention, the side of the second protective side wall 22 facing the first protective side wall 12 is provided with a protective structure 223. The lower side of the protective structure 223 can rotate toward the first protective side wall 12, and the bottom end of the protective structure 223 is lower than the bottom end of the second protective side wall 22. When the limb enters the bottom of the target side of the equipment body, it would touch the protective structure 223. Usually, the limb accidentally extends into the bottom of the target side of the equipment body unconsciously. Therefore, when the limb touches the protective structure 223 when extending into the bottom of the equipment body, the user will realize that the limb has entered the bottom of the equipment body, and at this time, the user will withdraw the limb to avoid danger. In addition, the protective structure 223 can extend the distance between the target side of the equipment body and the cutting tool of the cutting mechanism 3 in the horizontal direction, so that the limb needs to extend a certain distance before touching the cutting tool during the process of extending into the bottom of the target side of the equipment body, thereby preventing the limb from easily contacting the cutting tool and being cut.

Specifically, referring to FIG. 24, as an achievable embodiment, the protective structure 223 comprises a bracket 2231 and a rotating plate 2232. One end of the bracket 2231 extends in the horizontal direction and is connected to the side of the second protective side wall 22 facing the first protective side wall 12 and the other end of the bracket extends in the vertical direction to be flush with the bottom end of the second protective side wall 22. The end of the bracket 2231 extending in the horizontal direction extends the distance between the second protective side wall 22 and the cutting tool of the cutting mechanism 3.

The rotating plate 2232 is rotatably arranged on the side of the other end of the bracket 2231 facing the second protective side wall 22, and the bottom end of the rotating plate 2232 is lower than the bottom end of the second protective side wall 22. The horizontal distance between the rotating shaft of the rotating plate 2232 and the second protective side wall 22 is O, and O≤3mm, so that the rotating plate 2232 can rotate around the rotating shaft toward the second protective side wall 22 until it abuts against the second protective side wall. Thus, when a limb enters the bottom of the target side of the equipment body, the limb would touch the rotating plate 2232 to prompt the user that the limb has entered the bottom of the equipment body. When the limb continues to extend into the bottom of the equipment body, the rotating plate 2232 would rotate along with the limb until it abuts against the second protective side wall 22. At this time, the rotating plate 2232 can block the limb from continuing to enter. As an optional solution, when the rotating plate 2232 has rotated to abut against the second protective side wall 22, the distance between the bottom end of the rotating plate 2232 and the ground is between 50mm and 55mm, which can be 52mm or 53mm. The bottom end of the rotating plate 2232 guides the limb to continue extending obliquely downward along the bottom end of the rotating plate 2232 until it touches the ground.

Although the bottom end of the rotating plate 2232 has the function of guiding the movement of the limb, if the end of the limb bends upward after reaching the bottom of the rotating plate 2232 and passes by the bottom end of the first protective side wall 12, there is still a risk of touching the cutting area. To prevent the above danger, in some achievable embodiments of the present invention, a side of the first protective side wall 12 facing the cutting mechanism 3 is provided with a protective plate 123. When the limb passes by the bottom end of the first protective side wall 12 and bends upward, the end of the limb can be blocked by the protective plate 123, thereby preventing the limb from being cut.

Specifically, please continue to refer to FIG. 24. In some achievable embodiments of the present invention, one structure of the protective plate 123 is that the protective plate 123 comprises a guide part and a vertical part. One end of the guide part is connected to the first protective side wall 12, and the guide part forms an acute angle with the first protective side wall 12. One end of the vertical part is connected to the other end of the guide part, and the other end of the vertical part extends toward the ground to be flush with the bottom end of the first protective side wall. The inclined guide part can not only avoid the cutting area but also serve as a guide structure for the grass to be cut, so that the grass to be cut can extend along the protective plate 123 after entering from the gap between the protective plate 123 and the cutting mechanism 3, thereby preventing the protective plate 123 from blocking the grass to be cut from entering the cutting area. In addition, the inclined structure makes the protective plate 123 and the first protective side wall 12 form an accommodating cavity with an inclined top end. When the limb passes by the second protective side wall 22, the end of the limb will be blocked by the protective plate 123 and enter the accommodating cavity. At this time, if the limb extends upward, it will be blocked by the inclined top end of the accommodating cavity. Moreover, during the movement of the limb along the top end of the accommodating cavity, it will slide down to be flush with the bottom end of the protective plate 123 and the first protective side wall 12. At this time, the end of the limb would extend horizontally. Due to physiological characteristics, the limb such as a hand or a foot cannot extend reversely at its joint, or because the protective plate 123 extends the distance between the protective side wall and the cutting area, when the limb extends horizontally, the bendable joint at the end of the limb is within the protective range of the protective plate 123, resulting in the end of the limb being unable to further bend upward, thereby ensuring that the limb does not contact the cutting area.

Further, to fully cut the grass in the area to be cut and enable the grass in the area to be cut to enter between the cutting mechanism and the first protective side wall 12, the distance between the cutting mechanism and the bottom end of the vertical part in the vertical direction is M, and 12mm≤M≤15mm. The distance between the cutting mechanism and the bottom end of the vertical part in the horizontal direction is P, and 0mm≤P≤3mm. Thus, there is a gap between the cutting mechanism 3 and the connection part between the guide part and the vertical part. The grass to be cut can enter between the cutting mechanism 3 and the guide part from this gap and incline toward the guide part. As the grass near the cutting mechanism 3 is gradually cut, the grass near the guide part will gradually return to the upright state and thus be cut by the cutting mechanism 3, thereby reducing the amount of residual grass and making the cutting coverage wider.

To ensure that the components on the intelligent mower are fully utilized, the second protective cover 2 is an upper cover of the equipment body or a base of the equipment body.

On some intelligent mowers, the cutterhead on the cutting mechanism 3 can be lifted and moved. The liftable cutterhead can cut the grass to the required length according to the user's needs. When the intelligent mower is not working, the cutterhead can be raised to the highest position, which not only ensures the safety of personnel but also ensures that the cutterhead is not easily damaged by foreign objects. When the second protective cover 2 is the base of the equipment body, the cutting mechanism 3 of this embodiment can also be a liftable cutting mechanism 3, and the first protective cover 1 and the cutting mechanism 3 can move up and down synchronously relative to the base to ensure that, when the cutting mechanism 3 is at any height, the first protective cover 1 can always protect the limb extending into the bottom of the target side of the equipment body from being injured.

Next, the intelligent mower will be described in detail when the cutting mechanism is in gear states of different heights.

FIG. 25 is a schematic diagram of the cutting mechanism provided by an embodiment of the present application in the gear state of 80. Please refer to FIG. 25.

When the cutting mechanism 3 is in the gear state of 80, the distance between the cutterhead of the cutting mechanism 3 and the ground is 80mm. If the height of the rotating plate 2232 from the ground is 50mm, the vertical distance between the cutterhead and the rotating plate 2232 is 30mm. When the limb extends into the bottom of the target side of the intelligent mower, it would first touch the rotating plate 2232. As the limb continues to extend, the rotating plate 2232 rotates toward the first protective side wall 12 along with the limb until it abuts against the second protective side wall 22. The limb passes by the bottom end of the rotating plate 2232 and then bends upward. It can be understood that under the action of the second protective side wall 22 and the protective structure 223, the part of the limb that can pass by the bottom end of the rotating plate 2232 is the bendable end of the limb, that is, the fingertips. Under the action of the protective plate 123 and the vertical distance between the cutterhead and the rotating plate 2232, the fingertips cannot contact the cutting area, thereby ensuring that the limb is not injured.

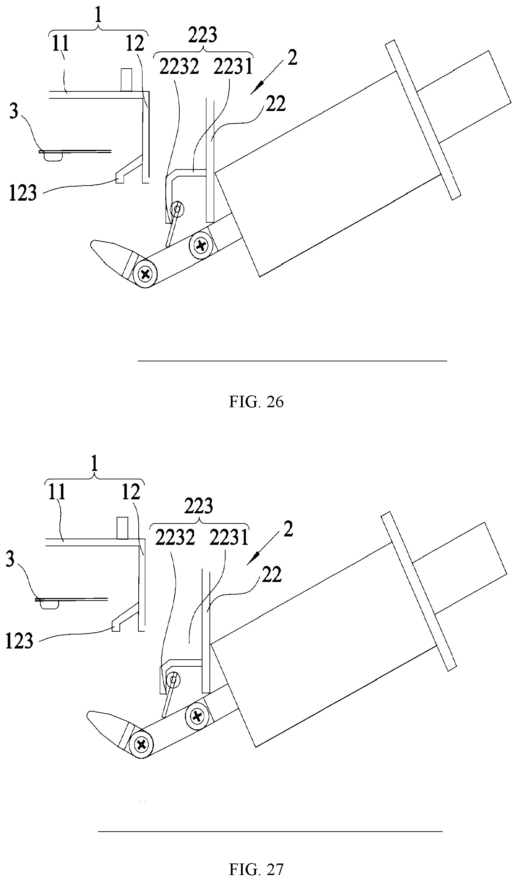

FIG. 26 is a schematic diagram of the cutting mechanism provided by an embodiment of the present application in the gear state of 90, and FIG. 27 is a schematic diagram of the cutting mechanism provided by an embodiment of the present application in the gear state of 100. Please refer to FIGS. 26 and 27.

As can be seen from the above description of the limb extending into the bottom of the target side of the intelligent mower when the cutting mechanism 3 is in the gear state of 80, the fingertips cannot contact the cutting area. When the cutting mechanism 3 is in the gear state of 90, the vertical distance between the cutterhead and the rotating plate 2232 is 40mm, and when the cutting mechanism 3 is in the gear state of 100, the vertical distance between the cutterhead and the rotating plate 2232 is 50mm, both of which are larger than the distance when the cutting mechanism 3 is in the gear state of 80. Therefore, when the cutting mechanism 3 is in the gear state of 90 and the gear state of 100, the limb also will not contact the cutting area.

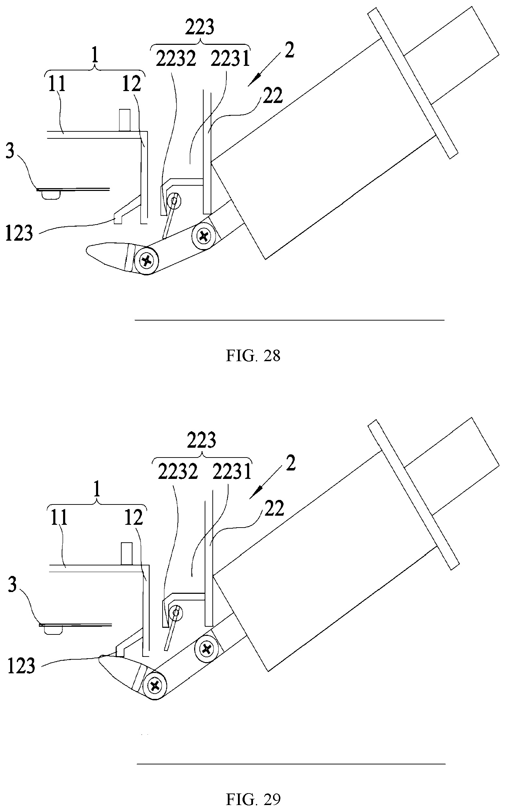

FIG. 28 is a schematic diagram of the cutting mechanism provided by an embodiment of the present application in the gear state of 70. Please refer to FIG. 28.

Since the height of the second protective cover 2 is constant, the process of the limb being blocked by the second protective cover 2 is the same as that when the cutting mechanism 3 is in the gear state of 80, which will not be repeated herein.

When the cutting mechanism 3 is in the gear state of 70, the height of the cutting mechanism 3 from the ground is 70mm, and the vertical distance between the cutterhead and the rotating plate 2232 is 20mm. After the end of the limb passes by the rotating plate 2232, it bends upward. At this time, it is also the fingertips that bend upward. Under the action of the protective plate 123 and the vertical distance between the cutterhead and the rotating plate 2232, the fingertips cannot contact the cutting area, thereby ensuring that the limb is not injured.

FIG. 29 is a schematic diagram of the cutting mechanism provided by an embodiment of the present application in the gear state of 60. Please refer to FIG. 29.

When the cutting mechanism 3 is in the gear state of 60, the height of the cutting mechanism 3 from the ground is 60mm. At this time, the height of the bottom end of the first protective side wall 12 from the ground is smaller than the height of the lowest end of the rotating plate 2232 from the ground. After the limb passes by the second protective side wall 22, it still needs to pass by the first protective side wall 12 before bending upward. During the bending process, it will abut against the lowest end of the protective plate 123, so that the end of the limb cannot continue to bend upward, thereby preventing the limb from being cut.

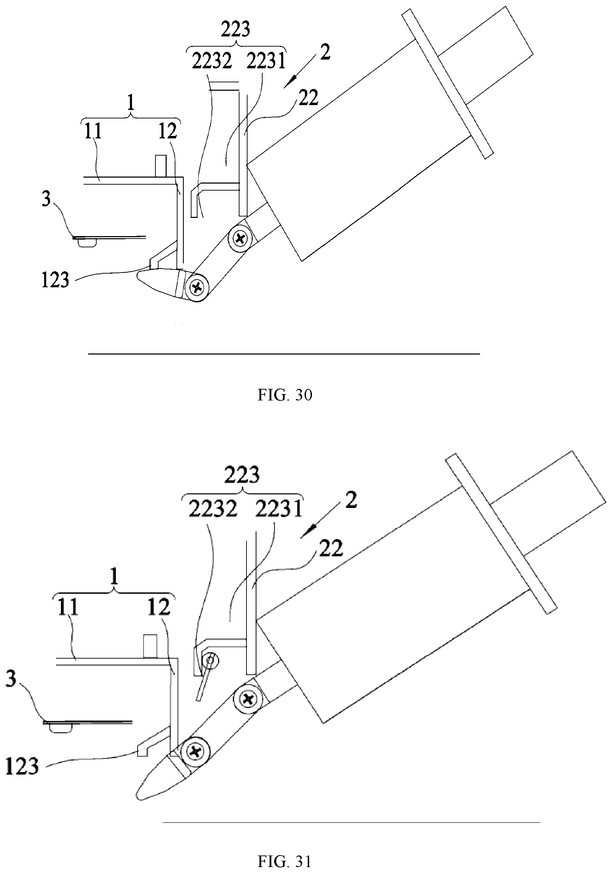

FIG. 30 is a schematic diagram of the cutting mechanism provided by an embodiment of the present application in the gear state of 50. Please refer to FIG. 30.

When the cutting mechanism 3 is in the gear state of 50, the height of the cutting mechanism 3 from the ground is 50mm. At this time, the height of the bottom end of the first protective side wall 12 from the ground is about 13mm smaller than the height of the lowest end of the rotating plate 2232 from the ground. After the limb passes by the second protective side wall 22, the wrist needs to bend downward at a certain angle when passing by the first protective side wall 12. At this time, the upward bending angle of the end of the limb after passing by the first protective side wall 12 will be reduced. When the end of the limb bends upward to the maximum angle, it will abut against the protective plate 123, thereby protecting the limb from the influence of the cutting area.

FIG. 31 is a schematic diagram of the cutting mechanism provided by an embodiment of the present application in the gear state of 40. Please refer to FIG. 31.

When the cutting mechanism 3 is in the gear state of 40, the height of the cutting mechanism 3 from the ground is 40mm. At this time, the height of the bottom end of the first protective side wall 12 from the ground is about 23mm smaller than the height of the lowest end of the rotating plate 2232 from the ground. After the limb passes by the second protective side wall 22, the joint at the end of the limb cannot pass by the first protective side wall 12, so the end of the limb cannot continue to bend upward, thereby protecting the limb from the influence of the cutting area.

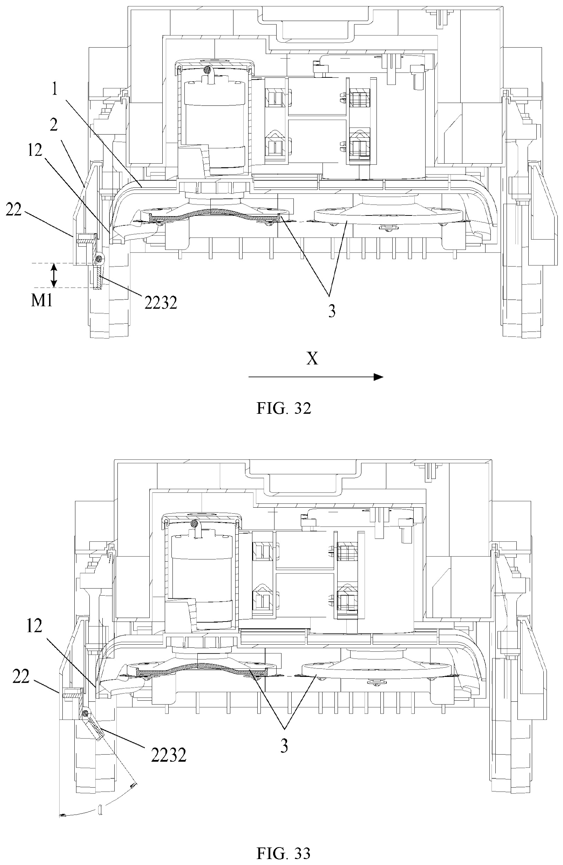

Referring to FIGS. 32 to 35, another type of rotating plate 2232 is provided in an embodiment of the present application. Combined with the above embodiments, the intelligent mower comprises at least one rotating plate 2232. The rotating plate 2232 is rotatably connected to the first protective side wall 12 and/or the second protective side wall 22 corresponding to the target side. The rotating plate 2232 extends downward and can rotate in a direction toward the cutting mechanism 3. The rotating plate 2232 may be arranged on the first protective side wall 12, or on the second protective side wall 22, or both the first protective side wall 12 and the second protective side wall 22 are provided with a rotating plate 2232. Usually, the rotating plate 2232 is arranged at an end position on the first protective side wall 12, or the rotating plate 2232 is arranged at an end position on the second protective side wall 22. The rotating plate 2232 extends downward, which can be understood as the rotating plate 2232 extending in a direction toward the ground, thus partially blocking the gap between the cutting mechanism 3 and the ground. When the user's hand or foot extends into the bottom of the equipment body from the target side, the rotating plate 2232 can provide effective protection and prevent the user's hand or foot from contacting the cutting mechanism 3. In addition, since the rotating plate 2232 can rotate freely, when the intelligent mower encounters an obstacle, the rotating plate 2232 can rotate to avoid the obstacle, so as not to adversely affect the passing performance and cutting performance of the intelligent mower.

Referring to FIGS. 32 to 36, an intelligent mower is further provided in an embodiment of the present application. The intelligent mower comprises an equipment body, a cutting mechanism 3, a first protective cover 1, a second protective cover 2 and a rotating plate 2232. In the width direction of the equipment body, as shown in the direction of arrow X in FIG. 32, the equipment body has a left side and a right side. The cutting mechanism 3 is arranged at the bottom of the equipment body and close to a target side of the equipment body, and the target side is the left side and/or the right side of the equipment body. The first protective cover 1 is arranged above the cutting mechanism 3, and the first protective cover 1 has a first protective side wall 12 extending downward; the bottom of the first protective side wall 12 is lower than the cutting tool on the cutting mechanism 3.

Further, the second protective cover 2 is arranged outside the first protective cover 1, and a part of the second protective cover corresponding to the target side of the equipment body is provided with a second protective side wall 22 extending downward. In the width direction of the intelligent cutting equipment, the first protective side wall 12 and the second protective side wall 22 are spaced apart. The rotating plate 2232 is rotatably connected to the first protective side wall 12 and/or the second protective side wall 22 corresponding to the target side. Wherein, in the vertical direction, the rotating plate 2232 extends downward. When the rotating plate 2232 is subjected to an external force, the rotating plate 2232 can rotate in a direction toward the cutting mechanism 3. When the external force is removed, the rotating plate 2232 will reset.

To reduce the traveling resistance caused by the friction between the grass surface and the machine body, there is a certain distance between the bottom end of the machine body of the intelligent mower and the ground. This distance enables a person's foot to extend under the machine body and approach the cutting elements such as the blade. For safety considerations, the cutting mechanism 3 of the intelligent mower is arranged at a position far from the boundary of the machine body, so that even if the operator extends his/her foot under the machine body, it will not contact the cutting elements. However, when the cutting mechanism 3 is far from the boundary of the machine body, it will lead to the problem of being unable to cut to the lawn edge. For example, when the cutting mechanism 3 encounters obstacles such as walls, fences, steps, etc., a wide uncut area will be formed. Such a wide uncut area that cannot be cut by the intelligent mower often needs to be trimmed manually, which is time-consuming and laborious. To solve the corresponding requirement of cutting to the lawn edge without adversely affecting the user's safety protection, the conventional technology is to provide a protective mechanism at the bottom of the cutting system. However, such a corresponding protective mechanism has problems such as grass pressing, grass entanglement, mud entanglement, etc., which would adversely affect the cutting effect of the machine and reduce the passing performance of the machine.

To solve the above technical problems, in the technical solution of the present application, the rotatable rotating plate 2232 is arranged on the first protective side wall 12 and/or the second protective side wall 22, so as to meet the cutting safety protection requirement without adversely affecting the cutting performance of the cutting mechanism and the passing performance of the intelligent mower.

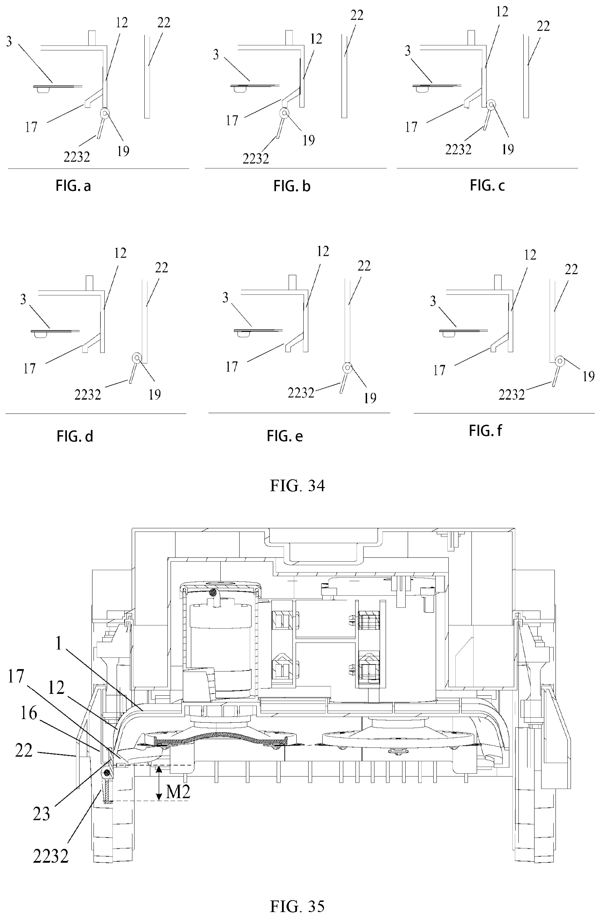

Further, referring to FIGS. 32 to 37, the rotating plate 2232 can be connected to the first protective side wall 12 and/or the second protective side wall 22 by means of a rotating shaft 19. When the rotating plate 2232 is arranged on the first protective side wall 12, the rotating plate 2232 is connected to the end of the first protective side wall 12 by means of the rotating shaft 19 (as shown in FIG. a in FIG. 34), or the rotating plate 2232 is connected to the outer wall surface of the first protective side wall 12 by means of the rotating shaft 19 (as shown in FIG. c in FIG. 34). Certainly, the rotating plate 2232 can also be connected to the end of the protective structure 17 by means of the rotating shaft 19 (as shown in FIG. b in FIG. 34), the rotating plate 2232 and the first protective side wall 12 form a structure similar to a loose leaf, and the rotating plate 2232 can rotate or swing by a certain angle relative to the first protective side wall 12. When the rotating plate 2232 rotates, the distance between the end of the rotating plate 2232 and the ground will increase.

The rotating plate 2232 rotates only when subjected to an external force. When the external force is removed, the rotating plate 2232 resets under the action of gravity, that is, resets to the vertical hanging state.

Similarly, when the rotating plate 2232 is arranged on the second protective side wall 22, the rotating plate 2232 is connected to the end of the second protective side wall 22 (as shown in FIG. e in FIG. 34) or the inner wall surface of the second protective side wall 22 (as shown in FIG. d in FIG. 34) by means of the rotating shaft 19. Of course, the rotating plate 2232 can also be arranged on the outer wall surface of the second protective side wall 22 (as shown in FIG. f in FIG. 34). As mentioned above, the second protective side wall 22 may be a double-layer side wall, which includes an inner protective wall 221 located on the inner side and an outer protective wall 222 located on the outer side. Therefore, the rotating plate 2232 may be arranged on the inner protective wall 221 or the outer protective wall 222. Similarly, the rotating plate 2232 may be arranged on the inner wall surface or the outer wall surface of the inner protective wall 221 and may be arranged on the inner wall surface or the outer wall surface of the outer protective wall 222. Alternatively, the rotating plate 2232 is arranged between the first protective side wall 12 and the second protective side wall 22 by means of the rotating shaft. For example, at a position between the first protective side wall 12 and the second protective side wall 22, which is not limited in this embodiment, the rotating plate 2232 is located at this position.

Of course, while providing the protective function, the rotating plate 2232 also needs to avoid contacting the cutting mechanism due to an excessive rotation angle. In one embodiment, the rotating plate 2232 is rotatable around the rotating shaft, so that the rotatable range of the angle α of the rotating plate relative to the first protective side wall 12 or the second protective side wall 22 is [40 degrees to 70 degrees]. In a preferred embodiment, the rotating angle α is 50 degrees. Alternatively, the range of the inclination angle of the rotating plate relative to the first protective side wall or the second protective side wall is [40 degrees to 70 degrees].

Further, referring to FIG. 35, when the rotating plate 2232 is connected to the first protective side wall 12, the distance M2 between the bottom of the rotating plate 2232 and the bottom of the first protective side wall 12 is 5mm-15mm. It can be understood that the distance M2 that the rotating plate 2232 extends downward from the bottom of the first protective side wall 12 is 5mm-15mm. In this embodiment, the distance M2 is 10mm. Referring to FIG. 32, when the rotating plate 2232 is connected to the second protective side wall 22, the distance M1 between the bottom of the rotating plate 2232 and the bottom of the second protective side wall 22 is 10mm-30mm. In this embodiment, the distance M1 is 15mm.

Although the rotating plate 2232 can bring a good protective effect, since the rotating plate 2232 extends toward the ground, this will inevitably reduce the distance between the rotating plate 2232 and the ground, and the passing performance and obstacle surmounting performance of the intelligent mower will be adversely affected.

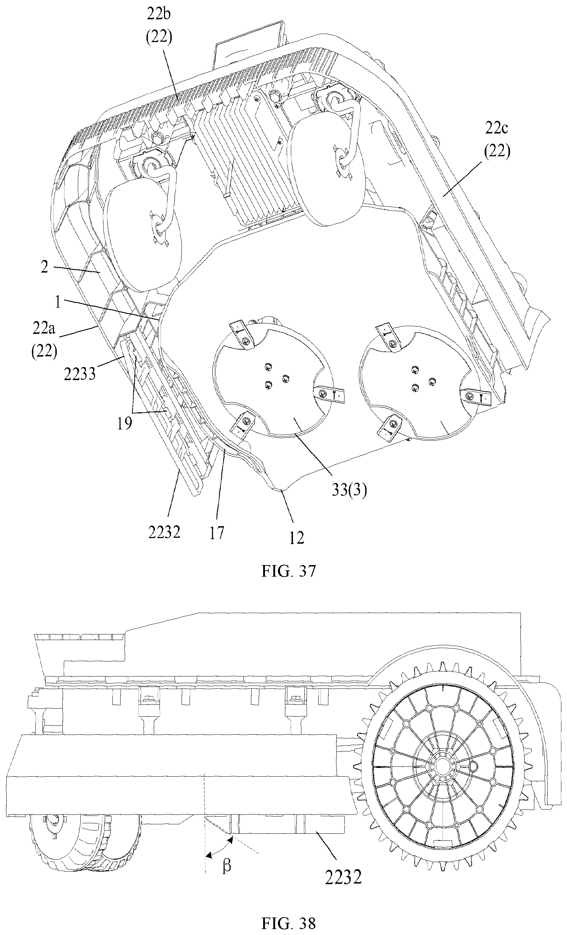

To prevent the rotating plate 2232 from seriously adversely affecting the passing performance and obstacle surmounting performance of the intelligent mower, in an embodiment provided by the present application, referring to FIGS. 37 and 38, along the length direction of the rotating plate 2232, the rotating plate 2232 is provided with a guide slope 2233. The guide slope 2233 may be at the front end of the rotating plate 2232, or at the rear end of the rotating plate 2232, or both the front end and the rear end of the rotating plate 2232 are provided with a guide slope 2233. Usually, the length direction of the rotating plate 2232 is the same as the length direction of the intelligent mower. The guide slope 2233 on the rotating plate 2232 can drive the rotating plate 2232 to rotate automatically when encountering obstacles such as weeds and mud, thereby preventing the rotating plate 2232 from continuously colliding with the obstacles and causing damage to the rotating plate 2232.

Specifically, in a specific implementation, referring to FIGS. 37 and 38, the front end of the rotating plate 2232 is provided with a guide slope 2233 facing the ground. It can be understood that, as shown in FIG. 38, the included angle β between the guide slope 2233 and the vertical center line of the equipment body is in the range of 30 degrees to 70 degrees. In this embodiment, the included angle β is 60 degrees. If the intelligent mower encounters obstacles such as weeds and mud during forward traveling, these obstacles will exert a force on the guide slope 2233. Under the action of this force, the rotating plate 2232 will rotate, thereby effectively avoiding direct contact with the obstacles and preventing the intelligent mower from being stuck at the obstacles. When the intelligent mower also moves backward, the rear end of the rotating plate 2232 may contact the obstacles during backward movement. Therefore, to prevent the intelligent mower from being stuck during backward movement, the same type of guide slope 2233 can also be provided at the rear end of the rotating plate 2232.

In the above embodiments, the first protective cover 1 and the cutting mechanism 3 can move up and down synchronously relative to the base to change the distance between the cutting mechanism 3 and the ground, so that the user can adjust the distance between the cutting mechanism 3 of the intelligent mower and the ground according to the required mowing height. When the rotating plate 2232 is arranged on the first protective side wall 12, since the bottom end of the rotating plate 2232 is lower than the bottom end of the first protective side wall 12, as the first protective cover 1 descends, the distance between the rotating plate 2232 and the ground may become too small, thereby seriously adversely affecting the passing performance and cutting performance of the intelligent mower.

Therefore, when the first protective cover 1 and the cutting mechanism 3 move downward relative to the base to a certain limit value, the rotating plate 2232 must be restricted from continuing to move downward along with the first protective cover 1, so as to prevent the distance between the rotating plate 2232 and the ground from being too small. Referring to FIG. 35, in an embodiment provided by the present application, the first protective side wall 12 is provided with a sliding seat 23. When the rotating plate 2232 is connected to the first protective side wall 12, the rotating plate 2232 is slidably arranged in the sliding seat 23, and the rotating plate 2232 can slide up and down along the vertical direction relative to the first protective side wall 12. Specifically, the sliding seat 23 on the first protective side wall 12 is arranged along the vertical direction. The rotating plate 2232 can slide up and down in the sliding seat 23. When the rotating plate 2232 slides downward, the end of the rotating plate 2232 approaches the ground. When the rotating plate 2232 slides upward, the end of the rotating plate 2232 moves away from the ground.

Usually, due to the action of gravity, the rotating plate 2232 is located at the bottom end of the sliding seat. When the first protective cover 1 descends too low, the rotating plate 2232 can slide upward relative to the first protective side wall 12, so that the distance at the end of the rotating plate 2232 is kept within a safe range. For example, a driving device can be arranged in the sliding seat 23. The driving device can drive the rotating plate 2232 to slide up and down. When it is detected that the end of the rotating plate 2232 is too close to the ground or encounters an obstacle, the driving device drives the rotating plate 2232 to slide upward to prevent the rotating plate 2232 from contacting the obstacle.

Further, referring to FIG. 35, the intelligent mower further comprises a limiting member 16. When the rotating plate 2232 moves downward to the limit position relative to the equipment body along the first protective side wall 12, the limiting member 16 can abut against the rotating plate 2232 to prevent the rotating plate 2232 from continuing to move downward to be too close to the ground. The limit position is a preset position according to the usage situation, which is not specifically limited herein.

The working process of the limiting member 16 is described in detail below. As mentioned above, the intelligent mower has multiple gear states, and the distance between the first protective side wall 12 and the ground is different under different gear states. Referring to FIGS. 7a-7d, in the first gear state, the distance between the first protective side wall 12 and the ground is the closest. In the fourth gear state, the distance between the first protective side wall 12 and the ground is the farthest. In the fourth gear state, the rotating plate 2232 can slide downward along the first protective side wall 12, and the limiting member 16 is not in contact with the rotating plate 2232 or does not act on the rotating plate 2232. With the adjustment of the gear state of the intelligent mower, for example, in the second gear state, the limiting member 16 abuts against the rotating plate 2232. When the intelligent mower continues to adjust from the second gear state to the first gear state, under the action of the limiting member 16, the position of the rotating plate 2232 relative to the ground remains unchanged, the rotating plate 2232 will slide upward relative to the first protective side wall 12, and the first protective side wall 12 will continue to move downward until the mower has been switched to the first gear state.

Since the height of the second protective cover 2 does not change when the intelligent mower switches gear states, in an embodiment of the present application, the limiting member 16 can be arranged on the second protective cover 2, or the limiting member 16 is connected to the bottom of the equipment body.

As mentioned above, the first protective side wall 12 has two types of structures: one is that the first protective side wall 12 is provided with a folded edge or a protective plate, and the other is that the first protective side wall 12 is not provided with a folded edge or a protective plate. In the technical solution of the present application, the rotating plate 2232 can be adapted to be connected to both of these two types of first protective side walls 12. When the first protective side wall 12 is provided with a folded edge or a protective plate, the folded edge or the protective plate and the rotating plate 2232 are respectively located on both sides of the first protective side wall 12. When the first protective side wall 12 is not provided with a folded edge or a protective plate, the rotating plate 2232 can be arranged on the inner side or the outer side of the first protective side wall 12.

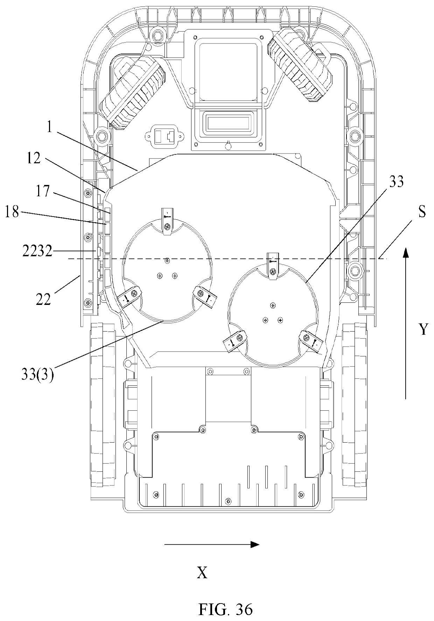

Referring to FIGS. 36, 38 and 39, the length of the rotating plate 2232 is Hr. The length of the rotating plate 2232 is greater than the diameter of the cutting cutterhead 33. The midpoint of the rotating plate 2232 is located near the dotted line S passing the center of the equipment body. The rear end of the rotating plate 2232 is close to the traveling driving wheel of the intelligent mower.

Referring to FIGS. 36 and 37, in an embodiment provided by the present application, the second protective cover 2 and the outer shell of the intelligent mower are of an integral structure. Along the length direction of the equipment body, as shown by the direction of arrow Y in FIG. 36, the second protective cover 2 is located on the front side of the traveling driving wheel. The second protective cover 2 is provided with segments of the second protective side wall 22 respectively facing three directions, and the segments of the second protective side wall 22 are arranged around the front side, the left side and the right side of the equipment body to provide effective protection for the intelligent mower. The segments of the second protective side wall located on the sides facing different functional directions can be either an integral structure or separate structures.

Further, to improve the intelligence level of the intelligent mower, when the intelligent mower collides with an obstacle, the intelligent mower can detect the collision in time. Collision sensing components can be arranged on the second protective side wall 22. For example, a collision sensing component is arranged on each of the segments of the second protective side wall 22 facing the three directions of the second protective cover 2. When one of the collision sensing components is triggered, the intelligent mower can detect the collision direction in time.

In addition, in another embodiment of the present application, the second protective side wall 22 can also be movably connected to the second protective cover 2. The equipment body is provided with at least one collision sensing component on each side of a different direction. When the second protective side wall 22 is impacted, the second protective side wall 22 can move relative to the second protective cover 2 (displacement within a small range), thereby triggering a corresponding collision sensing component arranged on the second protective side wall 22.

Referring to FIG. 37, in a specific embodiment, the segments of the second protective side wall 22 facing the three directions of the second protective cover 2 are arranged in separate segments (for example, the second protective side wall segment 22a, the second protective side wall segment 22b, the second protective side wall segment 22c). When one of the segments of the protective side wall 22 is impacted, it can displace slightly relative to the second protective cover 2, thereby triggering a collision sensing component at the corresponding position.

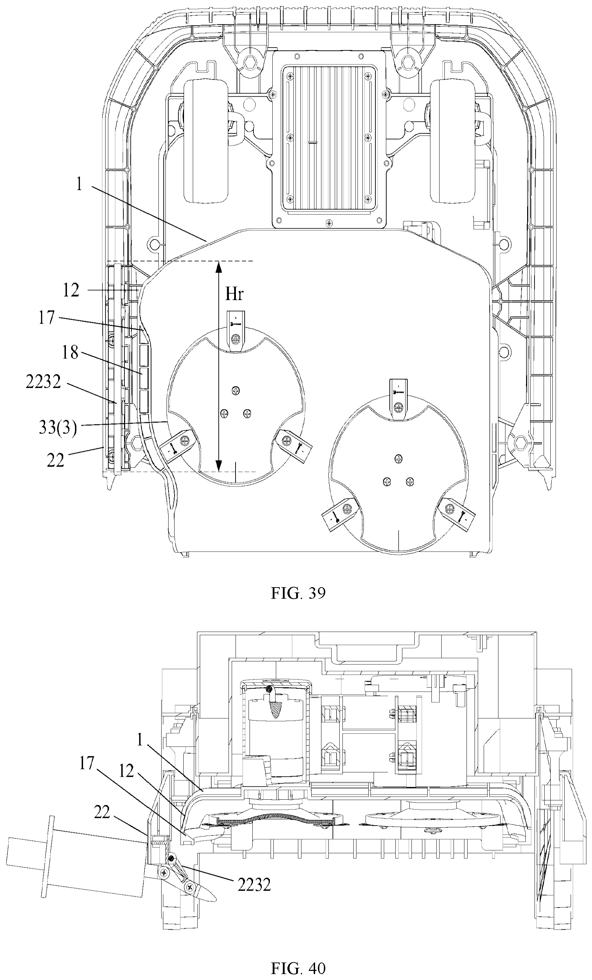

Referring to FIGS. 36 and 39, in an embodiment provided by the present application, the cutting mechanism 3 comprises a plurality of cutting cutterheads 33. Along the length direction of the equipment body, the plurality of cutting cutterheads 33 are arranged at the bottom of the equipment body in a staggered manner. Specifically, along the length direction of the equipment body, as shown by the direction of arrow Y in FIG. 36, the distances from the rotation centers of different cutting cutterheads 33 to the front end of the equipment body are different. Along the width direction of the equipment body, as shown by the direction of arrow X in FIG. 36, the distance between the rotation centers of different cutting cutterheads 33 is greater than the diameter of each cutting cutterhead 33. As shown in FIG. 36, the cutting mechanism comprises two cutting cutterheads 33 with the same diameter. Along the length direction of the equipment body, the rotation center of one of the cutting cutterheads 33 is close to the center line of the equipment body, which can be regarded as the position of the dotted line S in FIG. 36. The rotation center of the other cutting cutterhead 33 is located behind the center line. At least one cutting cutterhead 33 among the plurality of cutting cutterheads 33 is close to a target side of the equipment body. For example, in FIG. 36, the left side of the equipment body is the target side, and the cutting cutterhead 33 on the left side is close to the target side, thereby ensuring that the cutting cutterhead 33 can effectively cut to the lawn edge.

In addition, the diameters of the multiple cutting cutterheads 33 on the cutting mechanism may also be different, as shown in FIG. 23.

Arranging the multiple cutting cutterheads 33 in a staggered manner can also reduce the number of target sides. Referring to FIG. 36, since the traveling driving wheel does not block the middle part of the equipment body, the user's hand or foot can more easily extend into the bottom of the equipment from the middle part. By arranging the multiple cutting cutterheads 33 in a staggered manner, one cutting cutterhead 33 can be as far away from the middle part as possible. In this way, only one target side needs to be set, and the rotating plate 2232 is set on the target side to effectively provide the protective function.

Further, referring to FIG. 35, the bottom of the first protective side wall 12 corresponding to the target side is provided with a protective structure 17 that is lower than the cutting mechanism 3 and extends toward the inner side of the first protective cover 1. The protective structure 17 can provide a further protective function. The protective structure 17 can be the folded edge 122 or the protective plate 123 mentioned in the above embodiments. In addition to the structure with the guide part and the vertical part mentioned above, the protective plate 123 can also be a structure with a right triangle cross-section or a right trapezoid cross-section.

When the protective structure 17 is a folded edge, the upward-facing surface of the protective structure 17 is a horizontal surface; when the protective structure 17 is a protective plate 123, referring to FIGS. 33 and 35, the upward-facing surface of the protective structure 17 is an inclined surface, that is, the cross-section of the protective structure 17 is a right triangle.

To meet the requirements of lightweight design, referring to FIG. 36, in an embodiment provided by the present application, the protective structure 17 is provided with a hollow structure 18. While ensuring that the protective structure 17 has sufficient strength, the hollow structure 18 can effectively reduce the weight of the protective structure 17.

The actual protective effect of the rotating plate 2232 is described in detail below. Referring to FIG. 40, when the user's hand extends into the bottom of the intelligent mower, the user's fingers can fully extend into the gap between the bottom of the equipment body and the ground, and the user's wrist is blocked by the second protective side wall 22. At this time, under the action of the fingers, the rotating plate 2232 is forced to rotate by a certain angle, and the rotating plate 2232 can effectively block the user's fingers from extending toward the direction where the cutting mechanism 3 is located, thereby effectively protecting the user's fingers. In addition, when the user's foot sole extends into the bottom of the intelligent mower, the effect is the same. The second protective side wall 22 can effectively block the user's foot sole from continuing to extend inward, and the rotating plate 2232 can effectively block the user's toes from approaching the cutting mechanism 3.

As mentioned above, the intelligent mower has multiple working gear states. Under different working gear states, the height of the cutting mechanism 3 from the ground is different. When the working gear state is switched, the height of the cutting mechanism 3 from the ground will also change. The intelligent mower will be described in detail below when the cutting mechanism 3 is in gear states of different heights.

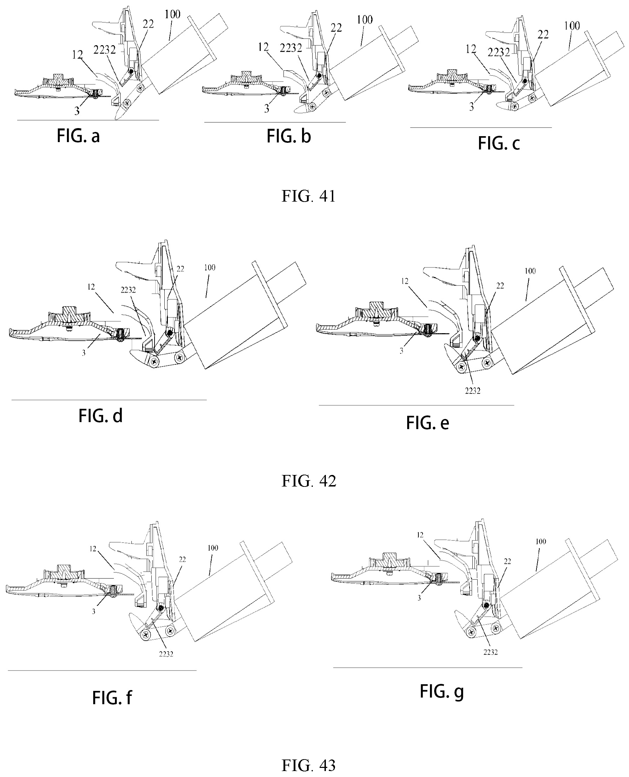

Referring to FIG. 41, FIGS. a, b, and c in FIG. 41 respectively show the state diagrams of the cutting mechanism 3 of the intelligent mower in the gear states of 30, 40 and 50. When the cutting mechanism is in the gear states of 30, 40 and 50, since the first protective side wall 12 is lower than the second protective side wall 22, when the handling finger 100 extends under the intelligent mower, the second protective side wall 22 can effectively block the wrist, and the first protective side wall 12 can effectively block the fingers from extending toward the cutting mechanism 3.

Referring to FIG. 42, FIGS. d and e in FIG. 42 respectively show the state diagrams of the cutting mechanism 3 of the intelligent mower in the gear states of 60 and 70. When the cutting mechanism is in the gear states of 60 and 70, since the first protective side wall 12 is higher than the end of the rotating plate 2232 on the second protective side wall 22, when the handling finger 100 extends under the intelligent mower, the second protective side wall 22 can effectively block the wrist, and the rotating plate 2232 on the second protective side wall 22 can effectively block the fingers from extending toward the cutting mechanism 3.

Referring to FIG. 43, FIGS. f and g in FIG. 43 respectively show the state diagrams of the cutting mechanism 3 of the intelligent mower in the gear states of 80 and 90. When the cutting mechanism is in the gear states of 80 and 90, since the first protective side wall 12 is significantly higher than the end of the rotating plate 2232 on the second protective side wall 22, when the handling finger 100 extends under the intelligent mower, the second protective side wall 22 can effectively block the wrist, and the rotating plate 2232 on the second protective side wall 22 can effectively block the fingers from extending toward the cutting mechanism 3. In addition, although the fingers can hook upward, since the cutting mechanism 3 has been lifted high enough, the ends of the fingers still cannot touch the cutting mechanism. Therefore, under the combined action of the first protective side wall, the second protective side wall, and the rotating plate 2232, the protective effect of the intelligent mower can be effectively improved.

To facilitate the understanding of the technical solution of the present application, a specific application scenario is given below to describe the intelligent mower provided by the present application in detail.

### Application Scenario 1

A lawn mowing robot, where the first protective cover and the second protective cover are covering part of the area of the cutting mechanism. The uncovered area of the cutting mechanism is located on the front side and the rear side of the lawn mowing robot. The lawn can be trimmed when the lawn mowing robot moves forward or backward. The bottom of the first protective side wall at a position corresponding to the left side or the right side of the equipment body is provided with a folded edge that is lower than the cutting mechanism and extends toward the inner side of the first protective cover. In the horizontal direction, there is a gap between the end of the folded edge of the first protective cover and the tool nose of the cutting mechanism. When the lawn mowing robot trims the edge of the lawn, the grass at the lawn edge can extend into the area where the cutting mechanism is located through the gap, thereby realizing cutting to the lawn edge. After the lawn mowing robot finishes trimming one lawn area, it needs to be carried to another area to continue working. When the user carries it, although the cutting mechanism on the lawn mowing robot has stopped rotating, accidentally touching the sharp cutting tool is still dangerous. Therefore, to prevent the user from accidentally touching the cutting tool when searching for a force acting point before carrying, the protective side wall of the second protective cover can effectively block the user's wrist and prevent it from further extending into the area where the cutting mechanism is located. In addition, when the cutting mechanism is relatively low from the ground, the folded edge on the protective side wall of the first protective cover can further block the user's fingers from extending toward the cutting mechanism. By arranging the first protective cover and the second protective cover, multiple protections can be provided for the user to prevent the user from accidental injury.

In summary, in the technical solution of the embodiments of the present application, by arranging the second protective cover outside the first protective cover, it is equivalent to arranging multiple protective covers, and the thickness of the second protective side wall is greater than that of the first protective side wall, thereby effectively improving the protective effect of the protective cover assembly. In addition, in the horizontal direction, there is a gap between the end of the folded edge of the first protective cover and the tool nose of the cutting mechanism. When trimming the edge of the lawn, the grass at the lawn edge can extend into the area where the cutting mechanism is located through the gap, thereby realizing cutting to the lawn edge. In addition, due to the gap, the objects cut off by the cutting mechanism would not easily accumulate inside the protective cover and cause the problem of tool jamming.

Finally, it should be noted that the above embodiments are only used to illustrate the technical solution of the present application, but not to limit it; although the present application has been described in detail with reference to the foregoing embodiments, those of ordinary skill in the art should understand that they can still modify the technical solutions described in the foregoing embodiments, or equivalently substitute some of the technical features; and these modifications or substitutions do not make the essence of the corresponding technical solutions deviate from the spirit and scope of the technical solutions of the embodiments of the present application.

## Claims

1. An intelligent mower, **characterized by** comprising:
an equipment body having a left side and a right side in a width direction of the equipment body;
a cutting mechanism eccentrically arranged at a bottom of the equipment body and close to a target side of the equipment body, wherein the target side is the left side or the right side, and the cutting mechanism has a cutting area relative to the equipment body;
a first protective cover having a first protective side wall extending downward, wherein a bottom of the first protective side wall corresponding to the target side is provided with a folded edge that is lower than the cutting mechanism and extends toward an inner side of the first protective cover;
wherein, there is a gap between an end of the folded edge and the cutting area of the cutting mechanism in a horizontal direction.

2. The intelligent mower according to claim 1, **characterized in that**, in the horizontal direction, the gap between the end of the folded edge and a tool nose of a cutting tool on the cutting mechanism is 0.1mm-5mm; and/or
in a vertical direction, a distance between the folded edge and the cutting tool on the cutting mechanism is 4mm-10mm.

3. The intelligent mower according to claim 1, **characterized in that**, in the horizontal direction,
a distance between a tool nose of a cutting tool on the cutting mechanism and the first protective side wall is 6mm-27mm; and/or
a length of the folded edge is 5.9mm-22mm.

4. The intelligent mower according to claim 1, **characterized in that** the first protective cover is provided with notches corresponding to a front side and a rear side of the equipment body, and a central angle corresponding to connection lines from two endpoints of each notch to a center point of the cutting mechanism is 65-85 degrees.

5. The intelligent mower according to any one of claims 1 to 4, **characterized by** further comprising a second protective cover;
the second protective cover is arranged above the first protective cover, and a part of the second protective cover corresponding to the target side is provided with a second protective side wall extending downward;
the second protective side wall is located outside the first protective side wall, and there is a gap between the second protective side wall and the first protective side wall.

6. The intelligent mower according to claim 5, **characterized in that** a bottom of the second protective side wall has a slope, being higher on an outer side and lower on an inner side.

7. The intelligent mower according to claim 5, **characterized in that** the gap between the second protective side wall and the first protective side wall is 5mm-20mm; and/or
a thickness of the second protective side wall is 25mm-35mm.

8. The intelligent mower according to claim 5, **characterized in that** the second protective side wall is a double-layer side wall:
the double-layer side wall comprises an inner protective wall located on an inner side and an outer protective wall located on an outer side;
a bottom of the outer protective wall is higher than a bottom of the inner protective wall.

9. The intelligent mower according to claim 8, **characterized in that** a height difference between the outer protective wall and the inner protective wall is 10mm-20mm; and/or
a height difference between the inner protective wall and the first protective side wall is 5mm-25mm.

10. The intelligent mower according to claim 8, **characterized in that** a gap between the inner protective wall and the first protective side wall is 5mm-10mm; and/or
a distance between the inner protective wall and the outer protective wall is 15mm-30mm.

11. The intelligent mower according to claim 5, **characterized in that** the second protective cover is an upper cover of the equipment body or a base of the equipment body.

12. The intelligent mower according to claim 11, **characterized in that** the second protective cover is the base of the equipment body;
the first protective cover and the cutting mechanism are arranged on the base, and the first protective cover and the cutting mechanism can move up and down synchronously relative to the base.

13. An intelligent mower, **characterized by** comprising:
an equipment body having a left side and a right side in a width direction of the equipment body;
a cutting mechanism eccentrically arranged at a bottom of the equipment body and close to a target side of the equipment body, wherein the target side is the left side or the right side;
a first protective cover arranged above the cutting mechanism, the first protective cover having a first protective side wall extending downward; a bottom of the first protective side wall is lower than a cutting tool on the cutting mechanism;
a second protective cover arranged above the first protective cover, a part of the second protective cover corresponding to the target side of the equipment body is provided with a second protective side wall extending downward;
wherein, the second protective cover extends a distance between the target side of the equipment body and the cutting tool in a horizontal direction.

14. The intelligent mower according to claim 13, **characterized in that** the second protective side wall is a double-layer side wall:
the double-layer side wall comprises an inner protective wall located on an inner side and an outer protective wall located on an outer side;
a bottom of the outer protective wall is higher than a bottom of the inner protective wall.

15. The intelligent mower according to claim 14, **characterized in that** a height of the bottom of the inner protective wall from the ground is 24mm-26mm;
a height of the bottom of the outer protective wall from the ground is 42mm-46mm;
in the horizontal direction, a distance between an outer surface of the outer protective wall and a tool nose of the cutting tool is 58mm-62mm.

16. The intelligent mower according to any one of claims 13 to 15, **characterized in that** a height difference between the bottom of the first protective side wall and the cutting tool is 7mm-15mm.

17. The intelligent mower according to claim 14, **characterized in that** a height of a bottom of the second protective side wall from the ground is 43mm-46mm;
in the horizontal direction, the distance between an outer surface of the outer protective wall and a tool nose of the cutting tool is 88mm-92mm.

18. An intelligent mower, **characterized by** comprising:
an equipment body, wherein a bottom of the equipment body is provided with a traveling wheel set, the traveling wheel set includes a front wheel set and a rear wheel set;
a cutting mechanism located between the front wheel set and the rear wheel set and positioned close to a right side or a left side of the bottom of the equipment body;
a second protective cover located outside the cutting mechanism and having an inner protective wall and an outer protective wall, wherein a height of the inner protective wall from the ground is lower than a height of the outer protective wall from the ground, and there is a gap between the inner protective wall and the outer protective wall.

19. The intelligent mower according to claim 18, **characterized in that** a width of the second protective cover is B, and B>20mm.

20. The intelligent mower according to claim 18, **characterized in that** a distance between the outer protective wall and a cutting area is F, and 25mm≤F≤55mm.

21. The intelligent mower according to claim 18, **characterized in that** a height difference between a bottom of the inner protective wall and a bottom of the outer protective wall is D4, and 10mm≤D4≤25mm.

22. The intelligent mower according to claim 18, **characterized in that** a height of a bottom of the inner protective wall is D2, and 30mm≤D2≤55mm.

23. The intelligent mower according to any one of claims 18 to 22, **characterized by** further comprising:
a first protective cover located between the second protective cover and the cutting mechanism, the first protective cover and the cutting mechanism are arranged at the bottom of the equipment body, and the first protective cover and the cutting mechanism can move up and down synchronously relative to the equipment body.

24. The intelligent mower according to any one of claims 18 to 22, **characterized in that** an outer side of the second protective cover is flush with a corresponding outer side of the equipment body and an outer side of the rear wheel set, and a diameter of the cutting mechanism is larger than half of a width of the bottom of the equipment body.

25. The intelligent mower according to any one of claims 18 to 22, **characterized in that** the front wheel set has a front wheel rotation area relative to the equipment body, the cutting mechanism has a first cutting area relative to the equipment body, part of the first cutting area protrudes out relative to the rear wheel set and the front wheel rotation area, and an outer side of the second protective cover exceeds an outer side of the rear wheel set.

26. The intelligent mower according to claim 25, **characterized by** further comprising:
a second cutting mechanism having a second cutting area relative to the equipment body, the second cutting area is located inside relative to the traveling wheel set, and a diameter of the second cutting mechanism is 1.5 times a diameter of the cutting mechanism.

27. The intelligent mower according to claim 26, **characterized in that** a distance between the second cutting area and the first cutting area is L, and L≥ 10mm.

28. An intelligent mower, **characterized by** comprising:
an equipment body having a left side and a right side in a width direction of the equipment body;
a cutting mechanism eccentrically arranged at a bottom of the equipment body and close to a target side of the equipment body, wherein the target side is the left side or the right side;
a first protective cover arranged above the cutting mechanism, the first protective cover having a first protective side wall extending downward; a bottom of the first protective side wall is lower than a cutting tool on the cutting mechanism;
a second protective cover arranged above the first protective cover, a part of the second protective cover corresponding to the target side of the equipment body is provided with a second protective side wall extending downward;
a side of the second protective side wall facing the first protective side wall is provided with a protective structure, the protective structure extends a distance between the target side of the equipment body and the cutting tool in a horizontal direction, a lower side of the protective structure can rotate toward the first protective side wall, and a bottom end of the protective structure is lower than a bottom end of the second protective side wall.

29. The intelligent mower according to claim 28, **characterized in that** the protective structure comprises:
a bracket, one end of the bracket extends in the horizontal direction and is connected to the side of the second protective side wall facing the first protective side wall, and the other end of the bracket extends in a vertical direction to be flush with the bottom end of the second protective side wall;
a rotating plate rotatably arranged on a side of the other end of the bracket facing the second protective side wall, and a bottom end of the rotating plate is lower than the bottom end of the second protective side wall.

30. The intelligent mower according to claim 28, **characterized in that** a side of the first protective side wall facing the cutting mechanism is provided with a protective plate.

31. The intelligent mower according to claim 28, **characterized in that** the protective plate comprises:
a guide part, one end of the guide part is connected to the first protective side wall, and the guide part forms an acute angle with the first protective side wall; and
a vertical part, one end of the vertical part is connected to the other end of the guide part, and the other end of the vertical part extends in a vertical direction to be flush with a bottom end of the first protective side wall.

32. The intelligent mower according to claim 31, **characterized in that** a distance between the cutting mechanism and a bottom end of the vertical part in the vertical direction is M, and 12mm≤M≤15mm.

33. The intelligent mower according to any one of claims 28 to 32, **characterized in that** a height of a bottom of the second protective side wall from the ground is G, and G=60mm.

34. The intelligent mower according to any one of claims 28 to 32, **characterized in that** a distance between an outer surface of the second protective side wall and an outermost end of the cutting mechanism is F, and 45mm≤F≤50mm.

35. The intelligent mower according to any one of claims 28 to 32, **characterized in that** the second protective cover is an upper cover of the equipment body or a base of the equipment body.

36. The intelligent mower according to any one of claims 28 to 32, **characterized in that** the second protective cover is the base of the equipment body;
the first protective cover and the cutting mechanism are arranged on the base, and the first protective cover and the cutting mechanism can move up and down synchronously relative to the base.

37. An intelligent mower, **characterized by** comprising:
an equipment body having a left side and a right side in a width direction of the equipment body;
a cutting mechanism arranged at a bottom of the equipment body and close to a target side of the equipment body, wherein the target side is the left side and/or the right side;
a first protective cover arranged above the cutting mechanism, the first protective cover having a first protective side wall extending downward; a bottom of the first protective side wall is lower than a cutting tool on the cutting mechanism;
a second protective cover arranged outside the first protective cover, a part of the second protective cover corresponding to the target side of the equipment body is provided with a second protective side wall extending downward;
a rotating plate rotatably connected to the first protective side wall and/or the second protective side wall corresponding to the target side;
wherein, in a vertical direction, the rotating plate extends downward, and when the rotating plate is subjected to an external force, the rotating plate rotates in a direction toward the cutting mechanism.

38. The intelligent mower according to claim 37, **characterized in that**:
the rotating plate is connected to an end of the first protective side wall or an outer wall surface of the first protective side wall by means of a rotating shaft; or
the rotating plate is connected to an end of the second protective side wall, an inner wall surface of the second protective side wall or an outer wall surface of the second protective side wall by means of a rotating shaft; or
the rotating plate is arranged between the first protective side wall and the second protective side wall by means of a rotating shaft;
wherein, the rotating plate is rotatable around the rotating shaft, so that an inclination angle of the rotating plate relative to the first protective side wall or the second protective side wall ranges from 40 degrees to 70 degrees.

39. The intelligent mower according to claim 38, **characterized in that** when the rotating plate is connected to the first protective side wall, the first protective side wall is provided with a sliding seat, the rotating plate is slidably arranged in the sliding seat, and the rotating plate can slide up and down along the vertical direction relative to the first protective side wall.

40. The intelligent mower according to claim 38, **characterized by** further comprising a limiting member arranged on the first protective cover or the equipment body;
when the rotating plate moves downward to a limit position relative to the equipment body along the first protective side wall, the limiting member abuts against the rotating plate.

41. The intelligent mower according to claim 37, **characterized in that** along a length direction of the rotating plate, a front end and/or a rear end of the rotating plate is provided with a guide slope facing the ground.

42. The intelligent mower according to any one of claims 37 to 41, **characterized in that** the cutting mechanism comprises a plurality of cutting cutterheads, and the plurality of cutting cutterheads are arranged at the bottom of the equipment body in a staggered manner along a length direction of the equipment body;
at least one of the cutting cutterheads is close to the target side of the equipment body.

43. The intelligent mower according to claim 42, **characterized in that** a bottom of the first protective side wall corresponding to the target side is provided with a protective structure that is lower than the cutting mechanism and extends toward an inner side of the first protective cover.

44. The intelligent mower according to claim 43, **characterized in that** an upward-facing surface of the protective structure is a horizontal surface or an inclined surface;
the protective structure is provided with a hollow structure.

45. The intelligent mower according to claim 44, **characterized in that** when the rotating plate is connected to the first protective side wall, a distance between a bottom of the rotating plate and the bottom of the first protective side wall is 5mm-15mm;
when the rotating plate is connected to the second protective side wall, a distance between the bottom of the rotating plate and a bottom of the second protective side wall is 10mm-30mm.

46. The intelligent mower according to claim 37, **characterized in that** the second protective side wall is movably connected to the second protective cover, and segments of the second protective side wall are arranged around a front side, a left side and a right side of the equipment body;
the equipment body is provided with collision sensing components on its sides facing different directions, and when the second protective side wall encounters a collision, the second protective side wall moves relative to the second protective cover to trigger a corresponding collision sensing component.
